(19) **Europäisches Patentamt**
**European Patent Office**
**Office européen des brevets**

(11) **EP 4 693 933 A1**

(12) **EUROPEAN PATENT APPLICATION**

(43) Date of publication:
**11.02.2026 Bulletin 2026/07**

(21) Application number: **24193779.6**

(22) Date of filing: **09.08.2024**

(51) International Patent Classification (IPC):
*H04B 7/06* (2006.01)          *H04W 24/10* (2009.01)
*H04W 36/00* (2009.01)

(52) Cooperative Patent Classification (CPC):
**H04W 36/0088; H04B 7/06952; H04B 7/088;**
**H04W 24/10**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Panasonic Intellectual Property**
**Corporation**
**of America**
**Torrance, CA 90504 (US)**

(72) Inventors:
- **DHANANJAYA, Harshith**
  **63225 Langen (DE)**
- **SUZUKI, Hidetoshi**
  **Osaka, 571-8501 (JP)**
- **KUANG, Quan**
  **63225 Langen (DE)**

(74) Representative: **Grünecker Patent- und**
**Rechtsanwälte**
**PartG mbB**
**Leopoldstraße 4**
**80802 München (DE)**

(54) **USER EQUIPMENT AND BASE STATION INVOLVED IN EVENT TRIGGERED MEASUREMENT REPORTING**

(57)     The present disclosure relates to a user equipment, UE, comprising the following. A transceiver of the UE, in operation, receives, from a base station, configuration information for configuring event triggered measurement reporting. A processing circuitry of the UE, in operation, obtains, from the configuration information, a first set of measurement reporting parameters, which is useable by the UE for measurement reporting, which is performed in response to determining that measurements on the one or more beams (i) fulfil a first condition obtained from the event triggered measurement reporting configuration and (ii) do not fulfil a second condition obtained from the event triggered measurement reporting configuration, and obtains a second set of measurement reporting parameters, which is useable by the UE for measurement reporting, which is performed in response to determining that measurements on the beam fulfil the second condition. Further, there are provided a base station and methods performed by the UE or the base station.

Fig. 8

**EP 4 693 933 A1**

**Description**

**FIELD OF THE PRESENT DISCLOSURE**

The present disclosure is directed to methods, devices and articles in communication systems, such as 3GPP communication systems.

**TECHNICAL BACKGROUND**

Currently, the 3rd Generation Partnership Project (3GPP) works at the technical specifications for the new radio access technology - 5G NR (New Radio), which is also called fifth generation (5G) or NR and used interchangeably herein.
One objective is to provide a single technical framework addressing all usage scenarios, requirements and deployment scenarios (see e.g., section 6 of 3GPP TR 38.913 e.g., version 16.0.0 or version 17.0.0), at least including enhanced mobile broadband (eMBB), ultra-reliable low-latency communications (URLLC), and massive machine type communication (mMTC). For example, eMBB deployment scenarios may include indoor hotspot, dense urban, rural, urban macro and high speed; URLLC deployment scenarios may include industrial control systems, mobile health care (remote monitoring, diagnosis and treatment), real time control of vehicles, wide area monitoring and control systems for smart grids; mMTC deployment scenarios may include scenarios with large number of devices with non-time critical data transfers such as smart wearables and sensor networks. The services eMBB and URLLC are similar in that they both demand broad bandwidth, while they are different in that the URLLC service may preferably require ultra-low latencies.
A Third objective is to achieve forward compatibility, which facilitates a completely new system design and/or the introduction of novel features.

**Summary**

One non-limiting and exemplary embodiment facilitates providing procedures for a UE to perform improved event triggered measurement reporting procedures.
In an embodiment, the techniques disclosed here feature a user equipment, UE, comprising the following. A transceiver of the UE, in operation, receives, from a base station, configuration information for configuring event triggered measurement reporting. A processing circuitry of the UE, in operation, obtains, from the configuration information, a first set of measurement reporting parameters, which is useable by the UE for measurement reporting, which is performed in response to determining that measurements on the one or more beams (i) fulfil a first condition obtained from the event triggered measurement reporting configuration and (ii) do not fulfil a second condition obtained from the event triggered measurement reporting configuration, and obtains a second set of measurement reporting parameters, which is useable by the UE for measurement reporting, which is performed in response to determining that measurements on the beam fulfil the second condition.
In another embodiment, the techniques disclosed here feature a base station, comprising the following. A processing circuitry of the base station, in operation, generates configuration information for configuring event triggered measurement reporting, wherein the configuration information indicates a first set of measurement reporting parameters, which is useable by the UE for measurement reporting performed in response to determining that measurements on one or more beams (i) fulfil a first condition obtained from the configuration information and (ii) do not fulfil a second condition obtained from the configuration information, and indicates a second set of measurement reporting parameters, which is useable by the UE for measurement reporting, performed in response to determining that measurements on the one or more beams fulfil the second condition. A transceiver of the base station, in operation, transmits the generated configuration information to the UE.
It should be noted that general or specific embodiments may be implemented as a system, a method, an integrated circuit, a computer program, a storage medium, or any selective combination thereof.
Additional benefits and advantages of the disclosed embodiments and different implementations will be apparent from the specification and figures. The benefits and/or advantages may be individually obtained by the various embodiments and features of the specification and drawings, which need not all be provided in order to obtain one or more of such benefits and/or advantages.

**Brief description of the Figures**

In the following exemplary embodiments are described in more detail with reference to the attached figures and drawings.

**Fig. 1**    shows an exemplary architecture for a 3GPP NR system to which the exemplary embodiments of the present disclosure may be applied;

**Fig. 2**   illustrates a split-gNB architecture, where a gNB is split into a gNB-central unit and one or more gNB-distributed units,

**Fig. 3**   is a signaling diagram for illustrating a LTM cell switch procedure involving a UE, a source gNB and a target gNB,

**Fig. 4**   illustrates an exemplary event triggered measurement reporting procedure,

**Fig. 5**   illustrates an exemplary and simplified structure of a UE and a base station,

**Fig. 6**   illustrates a functional structure of the circuitries pertaining to the UE,

**Fig. 7**   illustrates a functional structure of the circuitries pertaining to the base station,

**Fig. 8**   illustrates an exemplary and simplified flow diagram for the UE behavior according to an exemplary implementation of the present disclosure,

**Fig. 9**   illustrates an exemplary and simplified flow diagram for the base station behavior according to an exemplary implementation of the present disclosure,

**Fig. 10**   illustrates a first exemplary application scenario for the improved event triggered measurement reporting procedure according to the present disclosure,

**Fig. 11**   illustrates a second exemplary application scenario for the improved event triggered measurement reporting procedure according to the present disclosure,

**Fig. 12**   is a signaling diagram for illustrating an improved event triggered measurement reporting procedure according to a first variant of a Second solution involving a UE, a source gNB and a target gNB,

**Fig. 13**   is a signaling diagram for illustrating an improved event triggered measurement reporting procedure according to a second variant of the Second solution,

**Fig. 14**   is a signaling diagram for illustrating an improved event triggered measurement reporting procedure according to a third variant of the Second solution,

**Fig. 15**   is a signaling diagram for illustrating an improved event triggered measurement reporting procedure according to a first variant of a Third solution involving a UE, a source gNB and a target gNB,

**Fig. 16**   is a signaling diagram for illustrating an improved event triggered measurement reporting procedure according to a second variant of the Third solution,

**Fig. 17**   is a signaling diagram for illustrating an improved event triggered measurement reporting procedure according to a third variant of the Third solution,

**Fig. 18**   is a signaling diagram for illustrating an improved event triggered measurement reporting procedure according to a first variant of a Fourth solution involving a UE, a source gNB and a target gNB,

**Fig. 19**   is a signaling diagram for illustrating an improved event triggered measurement reporting procedure according to a second variant of the Fourth solution,

**Fig. 20**   is a signaling diagram for illustrating an improved event triggered measurement reporting procedure according to a third variant of the Fourth solution,

**Fig. 21**   is a signaling diagram for illustrating an improved event triggered measurement reporting procedure according to a first variant of a Fifth solution involving a UE, a source gNB and a target gNB,

**Fig. 22**   is a signaling diagram for illustrating an improved event triggered measurement reporting procedure according to a second variant of the Fifth solution,

**Fig. 23**   is a signaling diagram for illustrating an improved event triggered measurement reporting procedure according to a third variant of the Fifth solution,

**Fig. 24**   shows exemplary functional split options in 5G open-radio access network (O-RAN).

## DETAILED DESCRIPTION

*5G NR system architecture and protocol stacks*

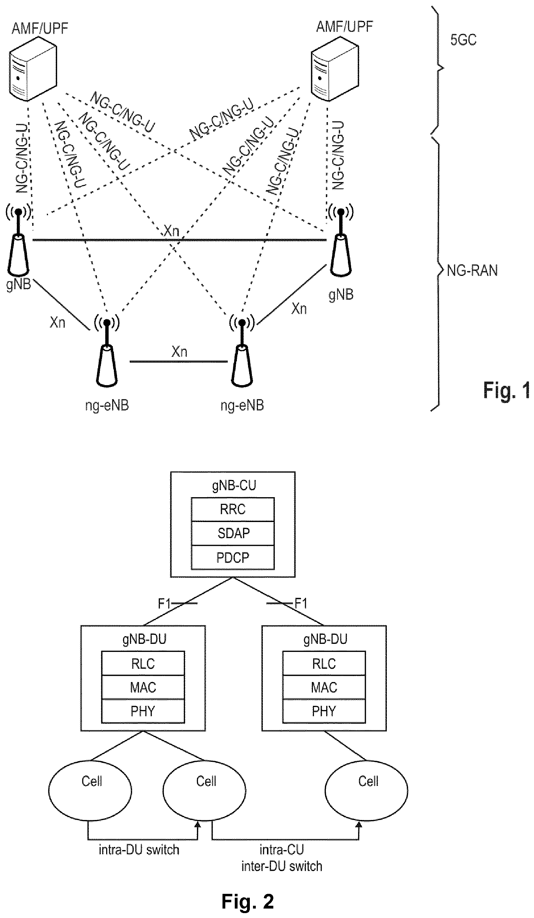

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

*Split gNB architecture*

In the 3GPP standard, a gNB can be split into a gNB-CU (Central Unit) and one or more gNB-DUs (Distributed Units). This is illustrated in **Fig. 2.**

The gNB-CU is a logical node that provides support for the higher layers of the protocol stack such as SOAP, PDCP and RRC. On the other hand, the gNB-DU is a logical node that provides support for the lower layers of the protocol stack such as RLC, MAC and Physical layer. Also, note that SDAP layer will not be present if the CU is connected to a 4G Core network as the 5G core network would be available to support SOAP. Therefore, the PHY and MAC layers are terminated at the gNB-DU, while Layer 3 (RRC) is terminated at the gNB-CU.

In one example, there is a single CU for each gNB, i.e. one gNB-DU is connected to only one gNB-CU; alternatively, for resiliency, a gNB-DU may be connected to multiple gNB-CUs. One gNB-CU may control multiple gNB-DUs; for example more than 100 gNB-DUs can be connected to one gNB-CU. Each gNB-DU is able to support one or more cells, so one gNB can control hundreds of cells unlike the 4G BTS. One cell is supported by only one gNB-DU.

Also, note that the interface between CU and DU is named F1, and as per 3GPP, it should be an open interface. For NG-RAN, the NG and Xn-C interfaces for a gNB consisting of a gNB-CU and gNB-DUs, terminate in the gNB-CU. For EN-DC, the S1-U and X2-C interfaces for a gNB consisting of a gNB-CU and gNB-DUs, terminate in the gNB-CU. The gNB-CU and connected gNB-DUs are only visible to other gNBs and the 5GC as a gNB.

The gNB-CU/DU architecture is specified in more detail e.g. in 3GPP TS 38.401 v18.1.0, e.g. section 6.1. The F1 interface is specified in more detail e.g. in 3GPP TS 38.473 v18.1.0.

*Random Access procedure*

When the UE moves from the coverage area of one cell to another cell, at some point a serving cell change needs to be performed. According to one possibility, serving cell change is triggered by L3 measurements and is done by RRC signalling triggered Reconfiguration according to a RACH (Random Access Channel) procedure (or simply random access procedure). The RACH procedure can also be used in other contexts within NR, for example:

- For handover, when synchronization is to be established to a new cell;
- To reestablish uplink synchronization to the current cell, if synchronization has been lost due to a too long period without any uplink transmission from the device;
- To request uplink scheduling, if no dedicated scheduling request resource has been configured for the device.

There are numerous events that may trigger the UE to perform a random access procedure (see 3GPP TS 38.300, section 9.2.6), including the following. The random access procedure is triggered by a number of events:

- Initial access from RRC_IDLE; the UE uses the CBRA (Contention-based Random Access) procedure based on the SS/PBCH blocks.
- RRC Connection Re-establishment procedure; the UE uses the CBRA procedure based on the SS/PBCH blocks.
- Handover; this uses the contention based or CFRA (Contention-free Random Access) procedures, and it can be based on SS/PBCH blocks or CSI-RS.
- DL or UL data arrival during RRC_CONNECTED when UL synchronisation status is "non-synchronised";

  ◦ In case of UL data arrival with non-synchronized UL, the UE uses the CBRA procedure based on the SS/PBCH blocks.
  ◦ In case of DL data arrival with non-synchronized UL, the network uses a PDCCH order with contention based or CFRA procedure based on the SS/PBCH blocks.

- UL data arrival during RRC_CONNECTED when there are no PUCCH resources for SR available; the UE uses the CBRA procedure based on the SS/PBCH blocks.
- SR failure; the UE sends a scheduling request in response to UL data arrival but fails to receive an UL grant from the network. The UE uses the CBRA procedure based on the SS/PBCH blocks.
- Transition from RRC_INACTIVE to RRC_CONNECTED state; the UE uses the CBRA procedure based on the SS/PBCH blocks.
- To establish time alignment for a secondary TAG; the network uses a PDCCH order with CBRA procedure based on the SS/PBCH blocks.
- Request for Other SI (see clause 7.3); if the SI is contained in Msg1, the UE uses a dedicated preamble based on association with SS/PBCH block. If the SI is contained in Msg3, the UE uses the CBRA procedure based on the SS/PBCH blocks.
- Beam failure recovery; the UE uses the contention based or CFRA procedure based on SS/PBCH blocks or CSI-RS association.

A mobile terminal can be scheduled for uplink transmission if its uplink transmission is time synchronized. Therefore, the Random Access Channel (RACH) procedure plays a role as an interface between non-synchronized mobile terminals (UEs) and the orthogonal transmission of the uplink radio access. For instance, the Random Access is used to achieve uplink time synchronization for a user equipment, which either has not yet acquired, or has lost, its uplink synchronization. Once a user equipment has achieved uplink synchronization, the base station can schedule uplink transmission resources for it. One scenario relevant for random access is where a user equipment in RRC_CONNECTED state, handing over from its current serving cell to a new target cell, performs the Random Access Procedure in order to achieve uplink time-synchronization in the target cell.

The PRACH consists of a preamble format made up of one or more preamble sequences transmitted in a time-frequency resource. The UE transmits the PRACH preamble in a PRACH occasion (RO) which is a time-frequency resource that the network allocates for preamble transmission.

There can be at least two types of random access procedures, contention based random access (CBRA) procedure, and contention free random access (CFRA) procedure. In the CBRA procedure, multiple users randomly select a preamble from a pool of preambles, and a contention resolution phase determines which user, if any, had its data successfully received by the network. Contention resolution resolves contention between two or more users selecting the same preamble. In the CFRA procedure, a preamble is uniquely pre-allocated to the user, hence there is no possibility of preamble collision between users and no need for contention resolution. An exemplary definition of a random access procedure can be found in 3GPP TS 38.321, v18.1.0 section 5.1.

*Layer-1-Layer-2-triggered mobility (LTM)*

According to one possibility the RACH serving cell change is triggered by L3 measurements and is done by RRC signalling triggered Reconfiguration with Synchronisation for change of PCell and PSCell, as well as release or add SCells when applicable. Such a procedure may involve complete L2 (and L1) resets, leading to longer latency, larger overhead and longer interruption time than beam switch mobility.

With the aim of reducing the mobility latency or interruption time for handover procedures, Layer-1-Layer-2-(also termed lower-layer) triggered mobility (LTM) was introduced in NR 3GPP Rel. 18 onwards. To facilitate a sequential cell switch, the cell switch shall be prepared in a manner that no RRC reconfiguration is needed for the UE after the cell switch, regardless of which candidate cell as a target candidate cell becomes the new serving cell.

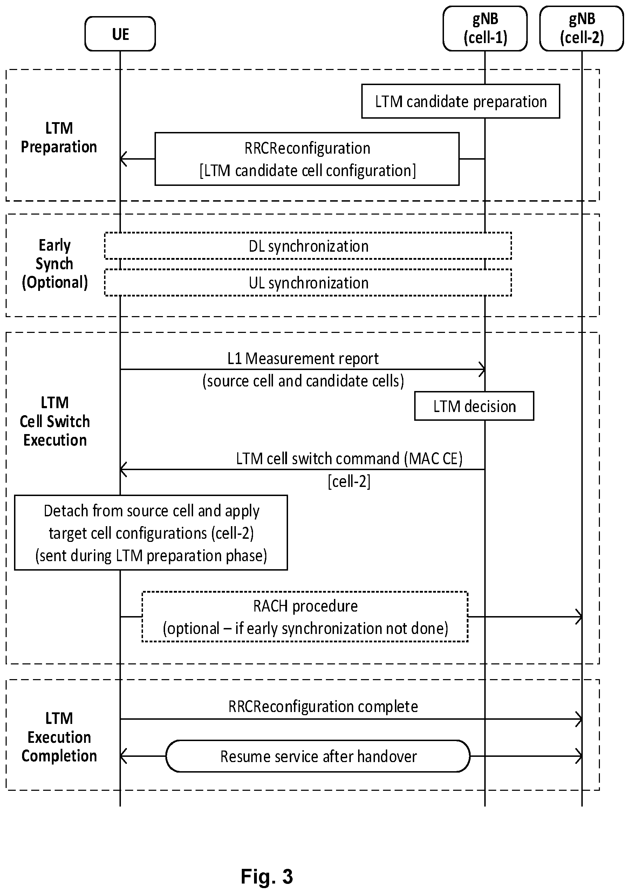

As illustrated in **Fig. 3,** an LTM cell switch procedure defines four LTM operation stages, namely LTM preparation, early synchronization execution, LTM cell switch execution and LTM execution completion. In the LTM preparation stage, the UE is configured by the RRC (L3) with a set of (LTM) candidate cells by the UE's serving cell (here termed as gNB (cell-1)). In the (optional) early synchronization execution stage, the UE may perform an early synchronization with a candidate cell or with one or more candidate beam(s) of at least one candidate cell. The early synchronization execution can be triggered by the UE's serving cell even before a cell switch (or handover) decision is administered towards one target cell, in order to facilitate fast cell switch (handover) operation by reducing synchronization overhead during handover. The early synchronization execution, may comprise, for example, that the UE acquires the synchronization signals (e.g., Primary Synchronization Signal, PSS, and Secondary Synchronization Signal, SSS) typically used to obtain the frame timing of the target beam or the target cell, thereby achieving time and frequency downlink synchronization. Furthermore, the early synchronization execution, may comprise, for example, that the UE obtains one or more timing advance (TA) value(s) of respective candidate beam(s) or respective target candidate cell(s) (for the early synchronization procedure). As an example, the TA value could be obtained by the UE from the source gNB, which has received it from the (one or more) candidate cell(s), for which early synchronization was executed. The TA value can be used to facilitate uplink timing synchronization between the UE and the target beam or target cell.

In the LTM cell switch execution stage, the serving cells receives from the UE measurement reports on beams (associated with detected and measured reference signals) of both the serving cell and the configured candidate cells. Based on the measurement results included in the measurement reports, the serving cell decides whether to execute an LTM cell switch to a target candidate cell or not. Then, L1- or L2 signalling (e.g. a MAC CE (and/or possibly a DCI)) is used to trigger the execution of the cell switch from the UE's serving cell to a target candidate cell (here to gNB (cell-2)) without RRC reconfiguration. As apparent therefrom, the cell switch is decided based on lower-layer (e.g. Layer 1 RSRP) measurements performed at the UE and reported to the gNB-DU to benefit mobility decisions performed by gNB (lower layer gNB or gNB-DU). In more detail, the UE is configured with L1 measurement configurations including a list of reference signals (or measurement channels) to generate L1 measurements and reports the measurement results to the serving gNB-DU (e.g. gNB (cell-1)). The reference signals can include reference signals from one or more candidate cells (neighbour cells) of the serving gNB-DU. Further, the UE is also configured with L1 reporting configurations with radio resources or reporting channels (like PUCCH, PUSCH, MAC CE, etc) to report the L1 measurement results to the network (e.g. via gNB (cell-1)).

After completing the LTM cell switch execution in the LTM execution completion phase by transmitting a completion confirmation to the new serving cell (here to gNB (cell-2)), which is serving the UE after the cell switch execution, a subsequent LTM cell switch execution can be performed by using the same RRC configuration sent during the LTM preparation phase. Such a subsequent LTM cell switch execution is referred to as "subsequent LTM".

While in NR 3GPP Rel. 18, the LTM operation is limited to intra gNB application, i.e. to LTM operation between gNB-DUs connected to a single gNB-CU, in NR 3GPP Rel. 19 inter gNB application, i.e. LTM operation between gNB-DUs connected to different gNB-CUs, is introduced with the aim of facilitating greater usability of LTM operations in mobility applications.

The benefit achieved by performing the measurement and reporting by Layer 1 is the low latency.

*Measurement reporting*

Reference signals, like SSB or CSI reference signals, are transmitted by the source cell (or serving cell) and one or more neighboring cells, which may serve as candidate cells, to enable the UE to generate cell level or beam level measurement results for evaluation at UE and to report channel conditions to network to be evaluated at the network for other features like cell switch decisions (network triggered cell switch r decisions). As an example, the measurement reporting of measurement results by the UE to the source cell, can be performed based on different reporting types and on different reporting procedures (or levels) indicated in the reporting configuration. For example, the IE ReportConfigNR (see e.g. e.g. in 3GPP TS 38.331 v18.01) specifies criteria for triggering of an NR measurement reporting event. The reporting type can be one of the following listed below:

- Periodic reporting

Measurements results of all the detected cells/ beams or detected reference signals associated with the cells or beams are regularly generated and reported to the network with a certain periodicity obtained at the UE by using configured periodicity information.

- Semi-persistent reporting.

The network, in particular the serving cell, triggers the start point for measurement reporting to begin for one or more configured cells/ beams/ reference signals, by sending a reporting request (or reporting trigger) to the UE. After reception of the UE reporting request) the UE generates and transmits measurement reports with a certain periodicity obtained at the UE by using configured periodicity information.

- Aperiodic reporting.

The network, in particular the serving cell, requests for measurement reports as and when required by sending a reporting request to the UE, and UE responds with a single measurement report for the requested cells/ beams/ reference signals to each reporting request.

- Event triggered reporting.

Measurement quality based events, which can be defined on a cell level or on a beam level, are configured at UE. The events define the trigger interval for activating (and deactivating) measurement reporting. Event triggered reporting will be discussed in more detail below.

Separate measurement reporting procedures (or levels) are defined as in 5G-NR is listed below.

- Layer-3 measurement reporting.

The measurement results are generated at layer-1, but are reported by the UE at the RRC layer using RRC message(s). The Layer-1 measurements are structured by RRC layer at UE and are transmitted as Measurement Report message in UL. Layer-3 measurement reporting is typically used for Layer-3 handover procedures (RACH based cell switch). The may use L3 measurement reporting during the LTM candidate preparation (see Fig. 3), e.g. for determining the LTM candidate cells to be configured at the UE.

- Layer-1 measurement reporting.

The measurement results are generated at layer-1 and are transmitted by the UE s directly over PHY layer messages like PUCCH or PUSCH in UL. The network uses L1 measurement reporting during the LTM cell switch procedure to enable faster reporting from the UE to the network and to benefit the lower layer of the serving gNB (or more precisely of the serving gNB-DU) to perform a cell switch decision to enable faster handover by reducing interruptions, which could originate from higher layer interpretations and/or higher layer decoding, during handover Layer-3 based handover procedures (RACH based cell switch).

*Event triggered measurement reporting*

Event triggered measurement reporting configurations are defined with specific event trigger conditions for reporting measurement results. The event trigger conditions are called entering condition (also "trigger condition") and leaving condition (also "cancel condition") and are defined for specific events, in order to allow for the UE to perform measurement reports to the network, only when specific events are approaching or are taking place, with the aim of avoiding measurement reporting overload.

The entering condition for an event is configured for measurement result ranges, for which the network considers measurement reporting useful to perform handover/cell switch execution decisions. The leaving condition of an event is configured for measurement result ranges, for which the network not consider the measurement reporting useful anymore after it was already triggered before and expects to eliminate cells from the event triggered criteria (which were already reported during entering condition). Optionally, the network may configure UE to report this 'event criteria eliminated' situation (i.e. leaving condition fulfilled) for cell or beam related measurements, by configuring a so called "reportOnLeave" parameter.

3GPP specification 38.331, v. 18.01, chapter 5.5.4 specified the following (RAT) events and event conditions defined for 5G NR.

- Event A1 for determining that serving cell becomes better than threshold: ○

$$\text{Entering condition: } Ms \ - Hys > \ Thresh$$

○

$$\text{Leaving condition: } Ms \ + Hys < \ Thresh$$

- Event A2 for determining that serving cell becomes worse than threshold: ○

$$\text{Entering condition: } Ms \ + Hys < \ Thresh$$

○

$$\text{Leaving condition: } Ms \ - Hys > \ Thresh$$

- Event A3 for determining that neighbor cell becomes offset better than SpCell (e.g. primary serving cell of either the Master Cell Group (MCG) or the Secondary Cell Group (SCG)): ○

$$\text{Entering condition: } Mn + Ofn + Ocn - Hys > Mp + Ofp + Ocp + Off$$

○

$$\text{Leaving condition: } Mn + Ofn + Ocn + Hys < Mp + Ofp + Ocp + Off$$

- Event A4 for determining that neighbor cell becomes better than threshold: ○

$$\text{Entering condition: } Mn + Ofn + Ocn - Hys > Thresh$$

○

$$\text{Leaving condition: } Mn + Ofn + Ocn + Hys < Thresh$$

- Event A5 for determining that SpCell becomes worse than threshold1 and neighbor becomes better than threshold2: ∘

$$\text{Entering condition: } Mp + Hys < Thresh1 \text{ and } Mn + Ofn + Ocn - Hys > Thresh2$$

∘

$$\text{Leaving condition: } Mp - Hys > Thresh1 \text{ and } Mn + Ofn + Ocn + Hys < Thresh2$$

- Event A6 for determining that neighbour becomes offset better than SCell: ∘

$$\text{Entering condition: } Mn + Ocn - Hys > Ms + Ocs + Off$$

∘

$$\text{Leaving condition: } Mn + Ocn + Hys < Ms + Ocs + Off$$

Parameter definitions of the event condition formulation are as follows:

∘ Hys is the hysteresis parameter for the event.

∘ Ms is the measurement result of the serving cell not taking into account any offsets.

∘ Mn is the measurement result of the neighbouring cell, not taking into account any offsets.

∘ Mp is the measurement result of the SpCell (or serving cell), not taking into account any offsets.

∘ Ofn is the measurement object specific offset of the reference signal of the neighbour cell.

∘ Ocn is the cell specific offset of the neighbour cell and set to zero if not configured for the neighbour cell.

∘ Ofp is the measurement object specific offset of the SpCell (or serving cell).

∘ Ocp is the cell specific offset of the SpCell (or serving cell) and is set to zero if not configured for the SpCell.

∘ Off is the offset parameter for the event.

∘ Thresh, Thresh 1, Threhs2 are the threshold parameter for the specific events i.e. a1-Threshold, a2-Threshold etc.

The computation units of each parameter are as follows:

∘ Ms, Mn, Mp are expressed in dBm in case of RSRP, or in dB in case of RSRQ and RS-SINR.

∘ Ofn, Ocn, Ofp, Ocp, Hys, Off are expressed in dB

∘ Thresh, Thresh 1, Threhs2 are expressed in the same units as Ms, Mn, Mp, respectively.

Other events defined for Inter RAT measurement reporting are event B1 (Inter RAT neighbour becomes better than threshold) and event B2 (PCell becomes worse than threshold1 and inter RAT neighbor becomes better than threshold2).

The entering and leaving conditions criteria are controlled by the network using the parameters defined for the specific event, which is identified in the event triggered measurement reporting configuration, to act upon the event trigger condition formulation computed and monitored by the UE.

Depending on the event and the configured UE keeps on measuring serving cells and/or neighbors report quantity/quality and validates it with the threshold or offset defined in measurement report configuration. The report quantity/quality for the event can be any of RSRP, RSRQ or SINR.

When the entering condition for a configured event are met, the UE transmits at least one initial measurement report including results of the measurements to the network (serving gNB). In addition, the event based measurement reporting configuration may include periodicity information like a 'Report Amount' parameter, which specifies the number of times UE must repeat measurement reporting and a 'Report Interval' parameter, which specifies the rate at which UE repeats measurement reports sent to the network (serving gNB), to indicate to the UE to repeat measurement reporting after entering condition is triggered. The range configurable by the 'Report Amount' parameter varies from '1' for indicating to transmit a single report to 'infinity' for indicating that measurements results are reported until the serving cell is changed due to cell switch (or until the leaving condition is met).

The event reporting configurations may also comprise a TimeToTrigger parameter, which indicates to the UE a certain duration (or a certain number of times) the UE is required to measure (and validate that the measurement results fulfil the entering condition) before reporting its first measurement result upon entering condition. This helps in avoiding providing measurement results when the measurement results "ping pong" between fulfilling and not fulfilling the entering condition (and the leaving condition).

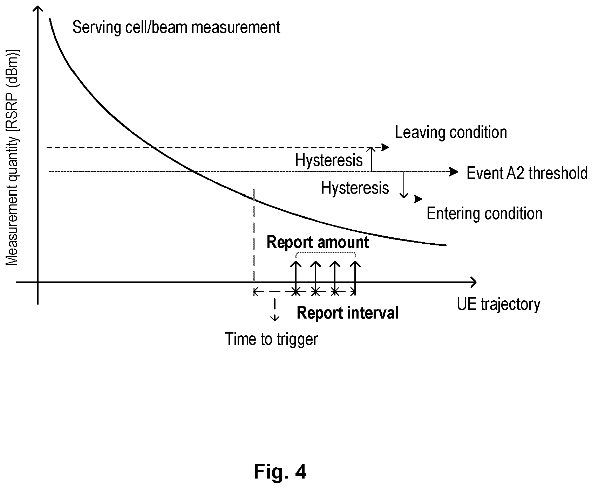

**Fig. 4** illustrates an exemplary event triggered measurement reporting procedure for the event A2. In this example, the UE evaluates an RSRP of the serving cell. When the RSRP of the serving cell fulfils the entering condition (i.e. becomes worse than a threshold, e.g. when the UE is moving away from the serving gNB), the UE triggers the measurement reporting. This means that after the requirements configured by the Time to trigger parameter, the UE starts to transmit measurement reports according to the periodicity information (i.e. the configured Report Amount' and 'Report Interval' parameters. If after triggering the measurement reporting, the RSRP of the serving cell becomes better again (i.e. becomes better than a threshold, e.g. when the UE is moving towards the serving gNB again) and the leaving condition is fulfilled, the UE deactivates the measurement reporting. Fig. 4 also illustrates the hysteresis between the entering condition and the leaving condition (configured by the Hys parameter), which is introduced in order to avoid "ping pong" between activating and deactivating the measurement reporting procedure, when the UE moves near the cell edge.

Other than for radio quantity/quality measurements related parameters, events can also be defined for distance based measurement related parameters or for time based measurement related parameters.

The benefits achieved by measurement reporting with event trigger conditions is to facilitate the utilization of less radio resources at the serving cell as compared to the other reporting types (or levels). Especially, event triggered measurement reporting allows the UE not to report measurement results until event trigger conditions are satisfied. This means for example that a threshold value configured for an event trigger conditions could be placed by the network such that the measurement reporting is triggered only when the handover situation is approaching. Furthermore, the periodicity information can be provided by the network to the UE for indicating to repeat the measurement results triggered for entering condition. This facilitates improving the handover performance, because measurement reports are made regularly available to the network (only) when necessary for handover decisions.

*Further improvements*

In NR Release 18, LTM related measurement reporting only supports periodic, semi-persistent, or aperiodic reporting types. In particular low layer (L1) measurement reporting in NR Release 18 only supports periodic, semi-persistent, or aperiodic reporting types, which are applied accordingly to the LTM cell switch, while higher layer (L3) measurement reporting in NR Release 18, supports periodic and event triggered measurement reporting.

In NR Release 18 LTM, the network may already configure up to 8 candidate cells for measurement reporting. This value may be increased beyond 8 in the NR Release 19 LTM procedure, to benefit inter-CU LTM (i.e. LTM between gNB-DUs connected to different gNB-CUs). Considering the large number of cells or cells per beam, which the UE may have report during L1 measurement reporting for LTM, integrating an event triggered measurement reporting procedure in L1 measurement reporting could be useful especially for LTM to facilitate reducing the bandwidth of required reporting resources and enabling an efficient handover performance.

Accordingly, 3GPP Release 19 enhancement activities for LTM focus on investigating components to support event triggered (low layer) measurement reporting type, with the intention to enhance the overall reporting performance and radio resource utilization efficiency. Especially, it is discussed to introduce LTM event triggered L1 measurement procedure should be designed for LTM related decisions such as selecting (by the serving cell) the candidate cells and/or candidate beams for an early synchronization execution (performed by the UE), and selecting (by the serving cell) the candidate cells and/or candidate beams for a LTM cell switch execution (performed by the UE).

In this respect, it is discussed to use beam level evaluation of cells as a baseline for event conditions defined for LTM related decisions. In this context, it is discussed to define LTMx events (adopted from the Ax events mentioned above) for beam specific quality evaluations of serving cell and/or candidate cells as the L1 LTM measurement events. For example, LTM2 (Beam of serving cell becomes worse than absolute threshold), LTM3 (Beam of candidate cell becomes amount of offset better than beam of serving cell), LTM4 (Beam of candidate cell becomes better than absolute threshold) and LTM5 (Beam of serving cell becomes worse than absolute threshold1 AND Beam of candidate cell becomes better than another absolute threshold2) are considered as exemplary candidate events for mobility use cases in LTM. But also other events for mobility use cases in LTM may be defined in the future, without being based on the existing Ax events or other existing event definitions. Further, cell level measurements for event evaluation and/ or reporting as well as defining entering and leaving condition for the event triggered reporting behavior are under discussion.

In this context, the inventors have identified problems, which may occur when adopting the legacy Ax events for defining the conditions for triggering (and optionally deactivating) the LTMx events. In particular, so far, event triggered measurement reporting procedure as per legacy NR, defines event trigger conditions such as entering condition and leaving condition to comply only with cell switching (or handover) related decisions, but do not consider early synchronization condition, which usually should be triggered before the cell switch criteria should be evaluated. In this respect, it is unclear how early synchronization decision and cell switch decision could be managed by the network, fulfilling the regular reporting requirements to support LTM related decision at the base station, while also facilitating the radio resource utilization efficiency during the measurement reporting.

*First solution - General configuration*

In the following an improved event triggered measurement reporting procedure according to a First Solution will be presented so as to overcome one or more of the above identified disadvantages of the prior art.

In the following, UEs, base stations (e.g. distributed unit and central unit thereof), integrated circuits and respective procedures to meet these needs will be described for the new radio access technology envisioned for the 5G mobile communication systems, but which may also be used in previous LTE-based mobile communication systems or future (e.g. 6G) mobile communication systems. Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a **mobile station** or **mobile node** or **user terminal** or **user equipment (UE)** is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "**base station**" or "**radio base station**" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be gNB in a Non-Terrestrial Network (NTN) NR system.

The base station can be implemented exemplarily in a split architecture (see Fig. 2), according to which a gNB can be split into a gNB-CU (Central Unit) providing support for the higher layers (e.g. RRC) and one or more gNB-DUs (Distributed Units) providing support for the lower layers (e.g. MAC, PHY).

Communication between the UE and the base station is typically standardized and may be defined by different layers, such as PHY, MAC, RRC etc. (see above background discussion).

The term "**obtain**" in connection with obtaining from an event triggered measurement reporting configuration a first set of measurement reporting parameters and a second set of measurement reporting parameters can be broadly understood as "**deriving**" or "**determining**" the parameter sets by using the event related parameters defined in the event triggered measurement reporting configuration.

In one example, the "**configuration**" is a configuration with one reporting configuration ID and is defined for a single event, which means the configuration information received by the UE for configuring the event triggered measurement reporting configuration identifies a single event (e.g. a single LTM event). For instance, in the one example, the UE "**obtains**" the first set of measurement reporting parameters, which can be configured for an early synchronization operation of LTM, and the second set of measurement reporting parameters, which can be configured for a cell switch operation of LTM, from a single configuration, which identifies (and is defined for) one LTMx event (e.g. one of LTM2, LTM3, LTM4 and LTM5).

In another example, it is also possible that the "**configuration**" may be composed of multiple configurations, each having one reporting configuration ID and being defined for a single event, which means the configuration information received by the UE for configuring the event triggered measurement reporting configuration may identifies more than one event (e.g. a plurality of LTM events). For instance, in the another example, the UE "**obtains**" the first set of measurement reporting parameters, which can be configured for the early synchronization operation of LTM from a first configuration, which identifies (and is defined for) a first LTMx event (e.g. one of LTM2, LTM3, LTM4 and LTM5), and the second set of measurement reporting parameters, which can be configured for the cell switch operation of LTM, from a second configuration, which identifies (and is defined for) a second LTMx event (e.g. one of LTM2, LTM3, LTM4 and LTM5).

The terms "**trigger (entering, or activate)**" and "**deactivate**" in connection with the measurement reporting procedure is to be broadly understood as a concept of controlling whether a measurement reporting is performed or not. Other possible terms could be used, such as "**start**" and "**stop**" respectively, or "**enable**" and "**disable**" respectively.

The term "**early synchronization measurement reporting**" in connection with the measurement reporting procedure should mean that one or more measurement report(s) are performed by the UE in order to enable the network (serving cell) to decide on, whether the UE should perform an execution of early synchronization with one of the beams (or the beam), which are (is) identified by the one or more measurement report(s). In the following description, for example, the measurement reports, which are prepared by the UE in connection with the early synchronization measurement reporting, may be prepared by using the first set of measurement reporting parameters.

The term "**cell switch measurement reporting**" in connection with the measurement reporting procedure should mean that one or more measurement report(s) are performed by the UE in order to enable the network (serving cell) to decide on, whether the UE should perform an execution of cell switch with one of the beams (or the beam), which are (is) identified by the one or more measurement report(s). In the following description, for example, the measurement reports, which are prepared by the UE in connection with the cell switch measurement reporting, may be prepared by using the second set of measurement reporting parameters.

The term "**measurement fulfil a condition**" or "**measurement results fulfil a condition**" can be understand in the context of event triggered measurement reporting, e.g. in the sense that the UE "**evaluates**" or "**validates**" that an measurement evaluated value for a beam or cell, which is obtained by performing and evaluating measurements on a reference signal associated with the beam or cell, "**fulfils**" or "**satisfies**" the condition, i.e. is larger or lower than e.g. a threshold or an offset defined for the respective event, for which the condition is "evaluated". For example, if the condition requires the measurement evaluated value for the beam or cell to be larger than a threshold, then the measurement results fulfil the condition, when the UE determines that the measurement evaluated value is larger than the threshold, and do not fulfil (or satisfy) the condition, when the UE determines that the measurement evaluated value is smaller than the threshold. Similar, if the condition requires the measurement evaluated value for the beam or cell to be smaller than a threshold, the measurement results fulfil the condition, when the UE determines that the measurement evaluated value is smaller than the threshold, and do not fulfil (or satisfy) the condition, when the UE determines that the measurement evaluated value is larger than the threshold.

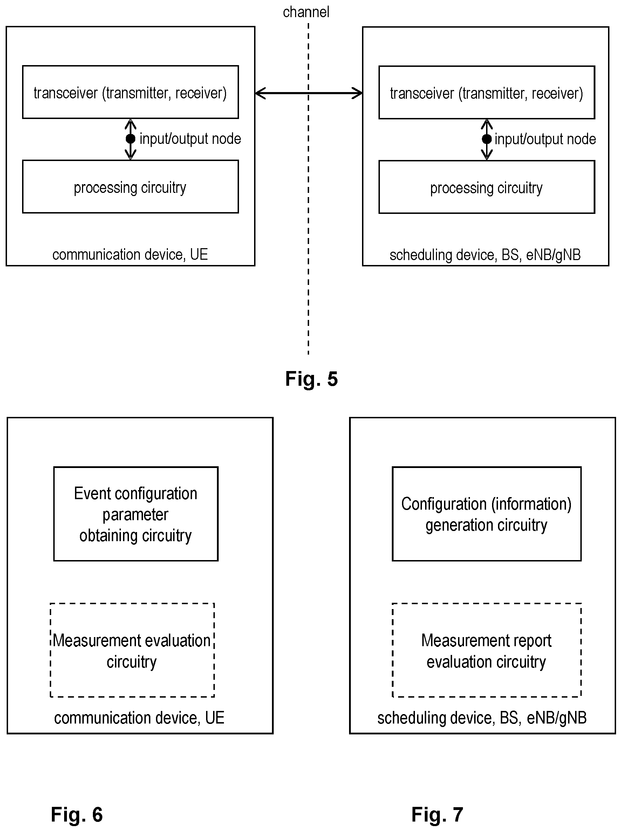

**Fig. 5** illustrates a general, simplified and exemplary block diagram of a UE (also termed communication device) and a scheduling device (here exemplarily assumed to be located in the base station, e.g., the LTE eNB (alternatively termed ng-eNB) or the gNB in 5G NR). The UE and eNB/gNB are communicating with each other over a (wireless) physical channel respectively using the transceiver.

The communication device may comprise a transceiver and processing circuitry. The transceiver in turn may comprise and/or function as a receiver and a transmitter. The processing circuitry may be one or more pieces of hardware such as one or more processors or any LSIs. Between the transceiver and the processing circuitry there is an input/output point (or node) over which the processing circuitry, when in operation, can control the transceiver, i.e., control the receiver and/or the transmitter and exchange reception/transmission data. The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

Different solutions of improved event triggered measurement reporting procedures will be described in the following, which facilitate for a UE to perform improved early synchronization execution procedures and improved cell switch execution procedures. In said connection, improved UEs, improved base stations and improved integrated circuits are presented, which participate separately or together in the improved event triggered measurement reporting procedures. Corresponding methods for the UE behavior and the base station behavior are provided as well. The integrated circuits may correspond to the UE and base station, and respectively their behavior.

The present solutions of the improved event triggered measurement reporting procedures can be based on some or a combination of the different mechanisms described above in context of the exemplary 3GPP 5G-NR implementations, including e.g. the use of event configurations (e.g. for obtaining measurement reporting conditions) or details on the implementation scenarios (see LTM) as currently discussed in 3GPP. Especially, the First solution is based on the idea of facilitating the configuration of LTMx events (defined e.g. in analogy to the Ax events described above), which is configured for enabling (event triggered) L1 measurement reporting in LTM. In particular, the First solution aims in supporting the UE in obtaining one or more early synchronization trigger condition(s), one or more cell switch trigger condition(s) and optionally early synchronization and cell switch leaving conditions from a single measurement reporting configuration, to assist the network to perform LTM related decisions like early synchronization execution and cell switch execution. Furthermore, the First solution aims in supporting the UE in determined, which reporting configuration to use for preparing the measurement reports, when more than one trigger condition is fulfilled.

**Fig. 6** illustrates a simplified and exemplary UE structure according to an exemplary implementation of the improved event triggered measurement reporting procedure, which can be implemented based on the general UE structure explained in connection with Fig. 5. The various structural elements of the UE illustrated in said Fig. 6 can be interconnected between one another e.g., with corresponding input/output nodes (not shown) e.g., in order to exchange control and user data and other signals. Although not shown for illustration purposes, the UE may include further structural elements.

As apparent from Fig. 6, the processing circuitry of the UE may include event configuration parameter obtaining circuitry and optionally, measurement evaluation circuitry.

In the present case as will become apparent from the below disclosure, the processing circuitry of the UE can thus be exemplarily configured to at least partly perform one or more of obtaining, from an event triggered measurement reporting configuration, a first set of measurement reporting parameters, e.g. for performing early synchronization measurement reporting, and a second set of measurement reporting parameters, e.g. for performing cell switch measurement reporting, performing, for one or more beams, an evaluation as to whether measurements on the one or more beams fulfil at least one of a first condition, e.g. for triggering early synchronization measurement reporting, and of a second condition, e.g for triggering cell switch measurement reporting, etc.

In the present case as will become apparent from the below disclosure, the transceiver of the UE can thus be exemplarily configured to at least partly perform one or more receiving configuration information for event triggered measurement reporting, transmitting one or more measurement report(s), etc.

One exemplary procedure as will be disclosed in more detail further below is implemented by a UE that includes the following. A transceiver of the UE, in operation, (is configured to) receives, from a base station, configuration information for configuring event triggered measurement reporting. A processing circuitry of the UE, in operation, (is configured to) obtains, from the configuration information, a first set of measurement reporting parameters, which is useable by the UE for measurement reporting, which is performed in response to determining that measurements on the one or more beams (i) fulfil a first condition obtained from the event triggered measurement reporting configuration and (ii) do not fulfil a second condition obtained from the event triggered measurement reporting configuration, and obtains a second set of measurement reporting parameters, which is useable by the UE for measurement reporting, which is performed in response to determining that measurements on the beam fulfil the second condition.

The processing circuitry of the UE may implement more functionality than the above-mentioned obtaining of the sets of parameter, as it may, for instance, further perform measurements on the one or more beams and prepare measurement reports, in response to determining that measurement reporting is activated for at least one of the one or more beams.

A corresponding exemplary method comprises the following steps performed by a UE:

receiving (from a base station), configuration information for configuring event triggered measurement reporting;

obtaining from the configuration information, a first set of measurement reporting parameters, which is useable by the UE for measurement reporting, which is performed in response to determining that measurements on the one or more beams (i) fulfil a first condition obtained from the event triggered measurement reporting configuration and (ii) do not fulfil a second condition obtained from the event triggered measurement reporting configuration, and a second set of measurement reporting parameters, which is useable by the UE for measurement reporting, which is performed in response to determining that measurements on the beam fulfil the second condition.

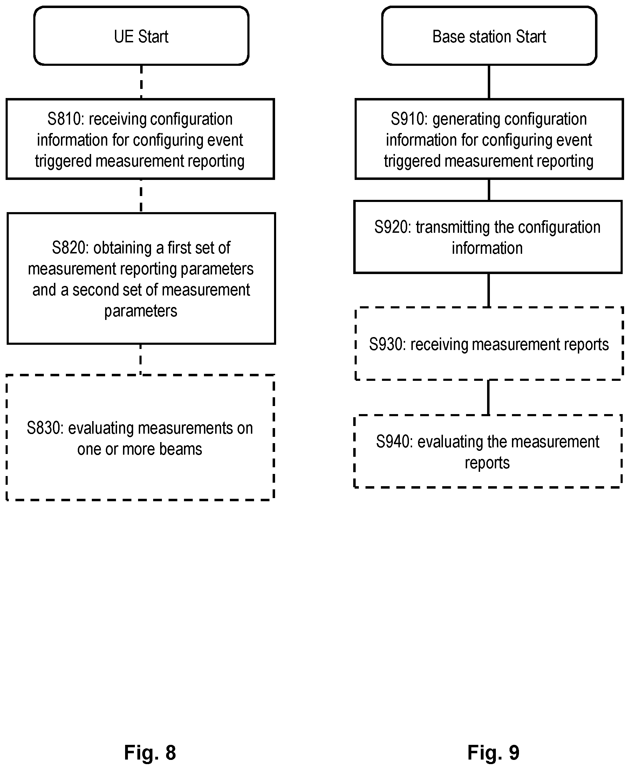

A corresponding sequence diagram for an exemplary UE behavior in line with the above-discussed UE and UE method is in **Fig. 8.** As illustrated, the method may further comprise an optional step (S830) of evaluating, for one or more beams, as to whether measurements on the one or more beams fulfil at least one of a first condition (e.g. a trigger condition for early synchronization measurement reporting) and of a second condition (e.g. a trigger condition for cell switch measurement reporting).

The above-described event triggered measurement reporting procedure thus facilitates achieving the objective and overcoming some of the drawbacks explained above. According to the First solution, for instance, it is facilitated to configure measurement reporting for LTMx events to support (lower layer or L1) measurement reporting for both LTM related procedures, namely early synchronization execution and cell switch execution, while at the same time facilitating to reduce or avoid measurement reporting overload. In particular, the flexibility to optimize radio resource utilization during reporting is facilitated by enabling to obtain separate parameter sets at the UE for configuring measurement reporting in connection with the early synchronization procedure of LTM, and for configuring the measurement reporting in connection with the cell switch execution procedure of LTM may not be altered. Furthermore, since measurement reporting in connection with the early synchronization procedure is only performed when measurement reporting in connection with the cell switch procedure is not performed, the duplication of reporting resources may be easier avoided.

Some exemplary implementations of the improved event triggered measurement reporting procedure also involve improved base stations. Correspondingly, the improved event triggered measurement reporting procedure also provides improved base stations that participate therein, as will be explained in the following.

**Fig. 7** illustrates a simplified and exemplary base station structure according to an exemplary implementation of the improved event triggered measurement reporting procedure, which can be implemented based on the general base station structure explained in connection with Fig. 5. The various structural elements of the base station illustrated in said Fig. 7 can be interconnected between one another e.g., with corresponding input/output nodes (not shown) e.g., in order to exchange control and user data and other signals. Although not shown for illustration purposes, the base station may include further structural elements.

As apparent from Fig. 7, the processing circuitry of the base station may include a configuration (information) generation circuitry, and optionally may include a measurement report evaluation circuitry.

In the present case as will become apparent from the below disclosure, the processing circuitry of the base station can thus be exemplarily configured to at least partly perform one or more of configuration information for configuring event triggered measurement reporting, wherein the event triggered measurement reporting configuration indicates a first set of measurement reporting parameters, e.g. for performing early synchronization measurement reporting, and a second set of measurement reporting parameters, e.g. for performing cell switch measurement reporting, evaluate eventually measurement results included in (eventually, i.e. depending on the channel conditions) received measurement reports, etc.

In the present case as will become apparent from the below disclosure, the transceiver of the base station can thus be exemplarily configured to at least partly perform one or more of transmitting the generated event triggered measurement reporting configuration, etc.

The processing circuitry of the base station may implement more functionality than the above-mentioned generating of configuration information, as it may, for instance, further evaluate whether to instruct the UE to execute early synchronization (and decide the candidate beam or cell, for which early synchronization is to be executed at the UE), evaluate whether to instruct the UE to execute a cell switch (and decide the target candidate beam or cell), and control the transceiver to transmit or receive control signaling and/or to receive or transmit data.

One exemplary procedure as will be disclosed in more detail further below is implemented by a base station that includes the following. A processing circuitry of the base station, in operation, (is configured to) generates configuration information for configuring event triggered measurement reporting, wherein the configuration information indicates a first set of measurement reporting parameters, which is useable by the UE for measurement reporting performed in response to determining that measurements on one or more beams (i) fulfil a first condition obtained from the configuration information and (ii) do not fulfil a second condition obtained from the configuration information, and indicates a second set of measurement reporting parameters, which is useable by the UE for measurement reporting, performed in response to determining that measurements on the one or more beams fulfil the second condition. A transceiver of the base station, in operation, (is configured to) transmits the generated configuration information to the UE.

A corresponding method comprises the following steps performed by the base station:

generating configuration information for configuring event triggered measurement reporting, wherein the configuration information indicates a first set of measurement reporting parameters, which is useable by the UE for measurement reporting performed in response to determining that measurements on one or more beams (i) fulfil a first condition obtained from the configuration information and (ii) do not fulfil a second condition obtained from the configuration information, and indicates a second measurement reporting configuration, which is useable by the UE for measurement reporting, performed in response to determining that measurements on the one or more beams fulfil the second condition; and

transmitting the generated event triggered measurement reporting configuration to the UE.

A corresponding sequence diagram for an exemplary base station behavior in line with the above-discussed base station and corresponding method is illustrated in **Fig. 9.** The sequence diagram illustrates an exemplary and simplified implementation of the above presented base station method. As illustrated, the method may further comprise an optional step (S930) of receiving one or more measurement reports according to the generated configuration information and an optional step (S940) of evaluating the received measurement reports, in order to decide on an early synchronization execution and/or a cell switch execution at the UE.

The different processes at the UE side and the base station have been explained with respect to above Figs. 7-11. More detailed and exemplary implementations of these processes of the improved measurement reporting procedure according to the First solution will be explained in the following.

<Entering conditions for early synchronization and for cell switch>

According to a first exemplary implementation of the First solution, the processing circuitry of the UE, in operation, performs measurements on the one or more beams, and evaluates the measurements, wherein the processing circuitry, in operation, triggers early synchronization measurement reporting for those of the one or more beams, whose measurement results fulfil the first condition and do not fulfil the second condition, and, in operation, triggers the cell switch measurement reporting for those of the one or more beams, whose measurement results fulfil the second condition.

As outlined above, exemplary the first condition and the second condition obtained from the an LTMx events may be defined for measurement of the radio quality/quantity measurement type, and the UE may determine the "measurement evaluated value" by measuring serving cells and/or neighbours report radio quantity/quality measurement parameters, like RSRP, RSRQ, SINR etc.. The determined "measurement evaluated value" (in the following illustrated examples the RSRP) is evaluated by the processing circuitry of the UE with respect to the first condition and the second condition obtained from the event triggered measurement reporting configuration.

If the processing circuitry of the UE determines that the "measurement evaluated value" of a certain beam fulfils the first condition, which serves as an entering condition for early synchronization measurement reporting, and does not fulfil the second condition, which serves as an entering condition for cell switch measurement reporting, the processing circuitry starts to prepare one or more measurement report(s) for this beam to report to the network that this beam fulfils the early synchronization criteria (as configured in the event triggered measurement reporting configuration). If the processing circuitry of the UE determines that the "measurement evaluated value" of a certain beam fulfils the second condition, which serves as the entering condition for cell switch measurement reporting, the processing circuitry starts to prepare one or more measurement report(s) for this beam to report to the network that this beam fulfils the cell switch criteria (as configured in the event triggered measurement reporting configuration).

While, in the presented solutions, report radio quantity/quality measurement parameters (especially RSRP) are used for configuring/obtaining the event triggered measurement reporting conditions, it should be kept in mind that alternatively or in addition the LTMx events may be defined for distance based measurement related parameters or for time based measurement related parameters.

For example, the first condition and the second condition obtained from LTMx events be defined for distance based measurements such as that the distance between the UE and a referenceLocation1 is above threshold1 and distance between UE and referenceLocation 2 is below threshold2 can be used for determining the starting point of measurement reporting at the UE. In such an implementation, the measurement evaluated value may refer to distance measurement information derived from parameters such as radio signal strength (e.g. RSRP, RSRQ, SINR etc.), signal traversal time (e.g. time of arrival, ToA, or time of departure, ToD, etc.) or signal traversal phase (e.g. angle of arrival, AoA, or angle of departure, AoD, etc.) Details for such an events are omitted here.

In another example, the first condition and the second condition obtained from LTMx events be defined for time based measurements such as that the time measured at the UE is within a duration from threshold can be used for determining the starting point of measurement reporting at UE. In such an implementation, the measurement evaluated value may refer to time/clock maintained at UE with reference to the epoch defined by UTC time or GNSS time ,etc. Details for such an events are omitted here.

Among the above provided different measurement types, at least the radio quality/quantity measurements parameter can be derived by lower-layer (e.g. Layer 1) measurements.

Because early synchronization is usually performed first during an LTM procedure, before a cell switch is performed (with the same or a different candidate beam), for an event triggered measurement reporting procedure performed for LTM operations, it is expected that the first condition (early synchronization criteria) defines lower requirements on the channel quality (e.g. a lower or higher threshold depending on the event definition) than the second condition (cell switch criteria).

Accordingly, the first condition, as a condition for triggering early synchronization measurement reporting, which is configured by using the first set of parameters, and the second condition, as a condition for triggering cell switch synchronization measurement reporting, which is configured by using the second set of parameters, could be, inter alia, defined by following either of the following approaches:

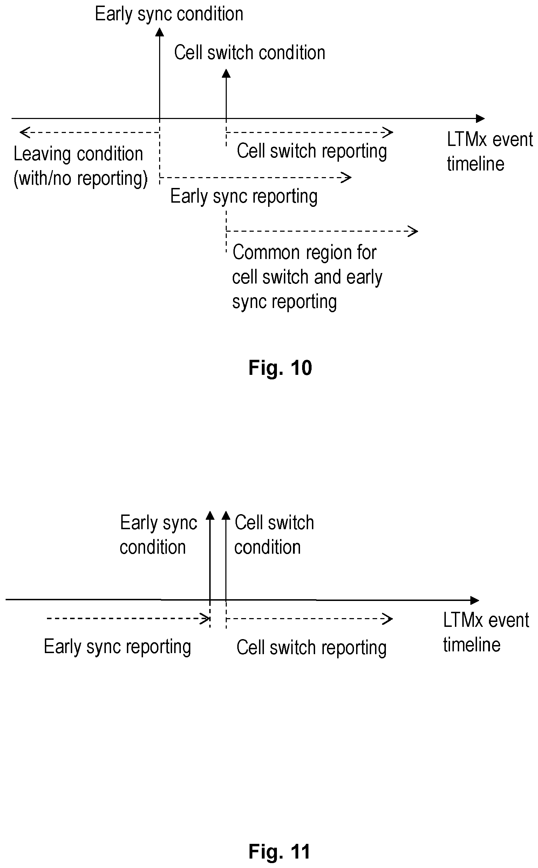

Approach 1: As illustrated in **Fig. 10,** the first condition and the second condition could be formulated to result in a common (trigger) region for early synchronization measurement reporting and for cell switch measurement reporting. Here, the term "common (trigger) region" should describe a region of the measurement results, where the measurement evaluated value fulfils both of the first condition and the second condition, so that the UE could trigger the two measurement reporting procedures. Approach 1 can, for example, result from application scenarios where for each one LTMx event two trigger conditions (namely the first condition and the second condition) are formulated (e.g. by using an indicated offset to shift the requirements of one condition with respect to the requirements of the other condition or by using different indicated threshold parameter or offset parameter to obtain to conditions) to support both early synchronization measurement reporting and cell switch measurement reporting, and where no (leaving) condition is formulated for deactivating the early synchronization measurement reporting for a beam before the cell switch criteria is reached. Furthermore, approach 1 can, for example, result from application scenarios where a combination of LTMx events (or one LTMx event in combination using different report config IDs) is configured to trigger one of early synchronization measurement reporting (eventually with shifted threshold configured to satisfy early synchronization criteria) and cell switch measurement reporting (with threshold configured to satisfy cell switch criteria).

Approach 2: As illustrated in **Fig. 11,** the condition(s) for performing/triggering early synchronization measurement reporting could be formulated without having a common (trigger) region with the condition(s) for performing/triggering cell switch measurement reporting. Approach 2 can for example result from the above mentioned application scenarios where in addition a (leaving) condition is formulated for deactivating the early synchronization measurement reporting for a beam before the cell switch criteria is reached. Especially, approach 2 can result, for example, when the condition for performing/triggering early synchronization measurement reporting requires that the leaving condition for performing/triggering cell switch measurement reporting is not fulfilled.

It should be noted that the solution and variants presented in the present disclosure are applicable to both discussed approaches.

<Preparation of measurement reports>

According to a second exemplary implementation of the First solution, the processing circuitry of the UE, in operation, in response to determining that measurements on the one or more beams fulfil the first condition and (ii) do not fulfil the second condition, prepares one or more measurement reports including results of the measurements for the at least one beam by using the first set of measurement reporting parameters and in response to determining that measurements on the one or more beams fulfil the second condition, prepares one or more measurement reports including results of the measurements according to the second set of measurement reporting parameters, and the transceiver, in operation, transmits the one or more measurement reports to the base station.

Especially, the conditions of events, like the LTMx events, in particular the first condition and the second condition could be formulated to independently trigger measurement reports in order to respectively support the early synchronization execution decision or the cell switch execution decision at the base station.

For facilitating avoiding the preparation of duplicated measurement reports and flexibly optimize the radio resource utilization for the two measurement reporting procedures, the UE follows the following procedure:

When the UE determines that measurement results for the reference signals associated with the evaluated beams (or cells) fulfil the first condition, but do not fulfil the second condition (see e.g. non-common early sync reporting region in Fig. 10 or early sync reporting region in Fig. 11) then the UE determines to perform early synchronization measurement reporting. Hereby, the UE prepares measurement reports for the beams (or cells) associated with the reference signals, which fulfil the first condition (and not the second condition), by using the parameters, which are configured for the early synchronization measurement reporting procedure (i.e. the first set of measurement reporting parameters). For example, as will be discussed in more detail below, the event triggered early synchronization measurement reporting can be configured to (i) be triggered and report only once, (ii) repeated and triggered periodically, (iii) repeated and triggered in semi-persistent periods and/ or (iv) triggered upon aperiodic requests from the serving gNB.

On the other hand, when the UE determines that measurement results for the reference signals associated with the evaluated beams (or cells) fulfil the second condition, (see e.g. cell switch reporting region in Fig. 10, which includes the common region, or cell switch reporting region in Fig. 11) then the UE determines to perform cell switch measurement reporting. Hereby, the UE prepares measurement reports for the beams (or cells) associated with the reference signals, which fulfil the second condition, by using the parameters, which are configured for the cell switch measurement reporting procedure (i.e. the second set of parameters). This means that, for the application scenario of approach 1 described above, for reference signals, for which the UE has determined measurement results satisfying the conditions of the common (trigger) region (i.e. both the early sync criteria and the cell switch criteria), the UE performs measurement reporting only for cell switch (i.e. prepares measurement reports according to the second set of parameters) and ignores the triggering of measurement reporting for early synchronization (i.e. does not prepare measurement reports according to the first set of measurement reporting parameters). For example, as will be discussed in more detail below, the event triggered cell switch measurement reporting can be configured to be triggered and report (i) only once, (ii) repeated and triggered periodically, (iii) repeated and triggered in semi-persistent periods and/ or (iv) triggered upon aperiodic requests from the serving gNB.

A further improvement of the improved event triggered measurement reporting procedure according to the First solution provides an improved measurement reporting. As presented above for some exemplary implementations, the gNB may rely on the results of measurements performed at the UE side, e.g. to determine the beams/cells for the early synchronization and to determine the target candidate beam/cell for a cell switch performed at the UE.

The present improvement of the event triggered measurement reporting procedure implements a lower-layer measurement reporting, such that the lower layer of the gNB has direct access to the measurement results from the UE without delay. The lower layer of the gNB could be e.g. the PHY or MAC layer.

The measurements as such can, but need not be limited to layer-1 measurements. Rather, the UE may perform one or more of layer-1 measurements (such as the radio quality/quantity measurements described) and layer-3 measurements (such as the radio quality/quantity measurements, the distance-based measurements or the time-based measurements described above).

The results of the measurements are then transmitted by the UE to the gNB at a lower layer and thus using lower-layer messages, e.g. an UL MAC CE or an UL PUCCH / PUSCH message. Such lower-layer messages are quicker compared to the layer-3 measurement reporting.

The UE can continuously perform different measurements on the one or more beams. Depending on the configured LTMx, the one or more beams can include at least one serving beam (e.g. for the events LTM2, LTM3 and LTM5), which is used for signal transmission and/or signal reception in the serving cell (e.g. serving gNB-DU), which is serving the UE, and at least one candidate beam (e.g. the events LTM3, LTM4 and LTM5), which is used for signal transmission and/or a signal reception after the cell switch from the serving cell to the target candidate cell. Hereby, the target candidate cell is one out of one or more candidates for participating in mobility (e.g. LTM) for the UE.

The one or more beams, for which measurements are evaluated by the UE may be identified in the event triggered measurement reporting configuration. As another possibility, the beams are configured and identified in a "measurement configuration", which is generally configured for the UE for all types of measurement reporting, and in the event triggered measurement reporting configuration just the index of the measurement configuration is provided to identify the one or more beams. In both exemplary implementations, the processing circuitry, in operation, determines the one or more beams from the event triggered measurement reporting configuration, and, performs the improved event triggered measurement reporting for the identified one or more beams.

<Time to Trigger>

According to a third exemplary implementation of the First solution, the processing circuitry, in operation, determines a first delay value for delaying the transmission of a measurement report in response to determining that measurements on the one or more beams fulfil the first condition and do not fulfil the second condition, and determines a second delay value for delaying the transmission of a measurement report in response to determining that measurements on the one or more beams fulfil the second condition.

In the third exemplary implementation of the First solution, each of the first set of measurement reporting parameters and of the second set of measurement reporting parameters may comprise a TimeToTrigger parameter, which allows the processing circuitry of the UE to obtain the first delay value (e.g. used for delaying early synchronization measurement reporting) and the second delay value (e.g. used for delaying cell switch measurement reporting). Hereby, the first delay value may be configured to be different from the second delay value, or in other words different time to trigger values may be configured for the early synchronization measurement reporting and the cell switch measurement reporting. The TimeToTrigger parameter may respectively specify a certain duration or a certain number of times the UE is required to measure the measurement results (and validate that the measurement results fulfil the entering condition) before reporting its first measurement result upon determining that the respectively the first condition or the second condition are met for measurements on a beam. As an alternative implementation, the event triggered measurement reporting configuration may include a common TimeToTrigger parameter, and the processing circuitry of the UE may obtain the first delay value and the second delay value from the common TimeToTrigger parameter. In this alternative implementation, the first delay value and the second delay value may be equal or a pre-configured offset could be used to differentiate both values.

In addition, TimeToTrigger parameter could also be specified for the second leaving condition (formulated for the cell switch criteria), in order to delay the deactivation of the cell switch measurement reporting, and/or for the first leaving condition (formulated for the early synchronization criteria), in order to delay the deactivation of the early synchronization measurement reporting.

< Leaving condition for cell switch>

According to a fourth exemplary implementation of the First solution, the processing circuitry, in operation, determines, from the event triggered measurement reporting configuration (information), a second leaving condition for deactivating the cell switch measurement reporting, and the processing circuitry, in operation, deactivates the cell switch measurement reporting, for those of the one or more beams, for which the cell switch measurement reporting is triggered and whose measurement results fulfil the second leaving condition.

The second leaving condition helps the processing circuitry of the UE to determine the execution condition for cell switch being not fulfilled (anymore) and hence a cell switch is not executed, for example in cases where the UE moves back towards the serving gNB (and away from a candidate gNB). For example, if the processing circuitry of the UE first determines that the measurement evaluated value of a certain beam fulfils the second condition, which serves as an entering condition for cell switch measurement reporting, the processing circuitry starts to prepare one or more measurement report(s) for this beam to report to the network that this beam fulfils the cell switch criteria (as configured in the event triggered measurement reporting configuration). Later, when a cell switch was not executed, and the processing circuitry of the UE determines that the "measurement evaluated value" of the same beam fulfils the second leaving condition, which serves as a leaving condition for cell switch measurement reporting, the processing circuitry deactivates the cell switch measurement reporting and stops (deactivates) preparing the measurement report(s) for the specific beam at least for the cell switch. For example, fulfilling the second leaving condition can mean, depending on the event identified in the event triggered measurement reporting configuration that the "measurement evaluated value" is smaller than a threshold or an offset configured in the event triggered measurement reporting configuration).

In order to avoid ping-ponging between activating and deactivating the cell switch measurement reporting, optionally a hysteresis value (see e.g. hysteresis in Fig. 4) can be defined for shifting the second leaving condition with respect to the second condition. This hysteresis value, which can be configured by the network by using the Hys parameter mentioned above, allows the network to shift the condition of measurement reporting deactivation to better channel conditions (or worse channel conditions depending on the event) compared to the channel conditions, which are configured as condition of measurement reporting activation.

Optionally, the network may configure UE to report the second leaving condition fulfilled situation (i.e. 'cell switch event criteria eliminated') in the event triggered measurement reporting configuration, by configuring the "reportOnLeave" parameter (for cell switch). Upon determining that the second leaving condition is fulfilled, the UE checks whether the reportOnLeave parameter (for cell switch) is configured. If the reportOnLeave parameter (for cell switch) is configured, then upon determining that the second leaving condition is fulfilled, the processing circuitry of the UE deactivates (or stops) cell switch measurement reporting after preparing and transmitting one last measurement report to the network. If the reportOnLeave parameter (for cell switch) is not configured, then upon determining that the second leaving condition is fulfilled, the processing circuitry of the UE just deactivates (or stops) cell switch measurement reporting without preparing and transmitting one last measurement report to the network.

Depending on the configuration of the event triggered measurement reporting configuration, there may occur the case that the UE first determines that the measurement evaluated value of a certain beam fulfils the second leaving condition (which means cell switch measurement reporting is to be deactivated) and at the same time fulfils the first condition (which means that condition for early sync measurement reporting is fulfilled).

In such cases, the processing circuitry (of the UE), in operation, after deactivating the cell switch measurement reporting for a beam (i.e. preparing measurement reports by using the second set of measurement reporting parameters), may determine to activate the early synchronization measurement reporting for the beam (i.e. preparing measurement reports by using the first set of measurement reporting parameters), when the measurement results of the beam fulfil the first condition.

That means, that even after determining that the leaving condition for cell switch measurement reporting is fulfilled (i.e. the cell switch criteria is not fulfilled anymore) for a specific beam, the UE would not stop preparing and transmitting measurement reports for the specific beam, as long as the UE determines that first condition for the specific beam is still fulfilled (i.e. the early synchronization criteria is still fulfilled). But in this case, the UE would start to prepare the measurement reports according to the parameters configured for the early synchronization measurement reporting, instead of using the parameters configured for the cell switch measurement reporting.

Similar, in implementations where a first leaving condition for deactivating the early synchronization measurement reporting is configured (see description below), there may occur the case that the UE determines that the measurement evaluated value of a certain beam fulfils the second leaving condition (which means that cell switch measurement reporting is to be deactivated), but does not fulfil the first leaving condition (which means early synchronization measurement reporting should not be deactivated).

In such cases, in an optional implementation, the processing circuitry (of the UE), in operation, after deactivating the cell switch measurement reporting for a beam, determines to continue the early synchronization measurement reporting for the beam, when the measurement results of the beam do not fulfil the first leaving condition.

Instead of continuing with the measurement reporting procedure, in another implementation example, the network (in particular the serving base station), upon receiving measurement reports indicating the fulfilment of the leaving condition (for beams/cells that have met the entering condition for cell switch before), may consider to instruct the UE to perform an early synchronization. This could especially facilitate using the same beam, which was reported for fulfilment of the leaving condition, during the ongoing LTM procedure or for a subsequent LTM procedure.

< Measurement result evaluation at the base station>

A further improvement of the improved event triggered measurement reporting procedure according to the First solution provides improved measurement result evaluation at the base station. As presented above for some exemplary implementations, the gNB may rely on the results of measurements performed at the UE side, e.g. to determine the early synchronization execution (the timing and the selection of the target beam/cell) and to the cell switch execution (the timing and the selection of the target candidate beam/cell).

According to a fifth exemplary implementation of the First solution, the processing circuitry of the base station, in response to receiving from the UE a measurement report including measurement results, which fulfil the first condition and do not fulfil the second condition, evaluates whether to instruct the UE to execute early synchronization with a beam, for which the measurement results are reported.

In other words, in the fifth exemplary implementation, the base station (e.g. the serving gNB) receives one or more measurement report(s) for a beam (or for more beams), for which early synchronization had not been performed before. The measurement report(s) are transmitted by the UE, as a consequence of determining by the UE that the measurement results, e.g. in form of the measurement evaluated value, for the (one or more) beam(s) fulfil the first condition, which triggers measurement reporting for early synchronization, but do not fulfil the second condition, which triggers measurement reporting for cell switch. In response to receiving the measurement report, the base station determines the channel conditions for the reported beam(s) from the measurement report. In this scenario, the base station, for example, may determine that the early synchronization criteria may be fulfilled for one of the one or more reported beams, while the cell switch criteria is not fulfilled. Accordingly, the base station may select one of the reported beams and may instruct the UE to execute early synchronization with this reported beam in accordance with its determination.

According to a sixth exemplary implementation of the First solution, which may be implemented in addition or alternatively to the fifth exemplary implementation of the First solution, in response to receiving from the UE a measurement report including measurement results, which fulfil the second condition, for a beam among the one or more beams, (i) evaluates, on the basis of the measurement results, whether to instruct the UE to execute a low layer mobility cell switch, if early synchronization has been performed for the beam, (ii) instructs the UE to execute early synchronization for the beam, if early synchronization has not been performed for the beam, or (iii) evaluates, on the basis of the measurement results, whether to instruct the UE to perform to execute a Random Access Channel, RACH, based cell switch, if early synchronization has not been performed for the beam.

In a first scenario of the sixth exemplary implementation, the base station (e.g. the serving gNB) may receive one or more measurement report(s) for a beam (or for more beams), for which early synchronization had been performed before. The measurement report(s) are transmitted by the UE, as a consequence of determining by the UE that the measurement results, e.g. in form of the measurement evaluated value, for the (one or more) beam(s) fulfil the second condition, which triggers measurement reporting for cell switch. In response to receiving the measurement report, the base station determines the channel conditions for the reported beam(s) from the measurement report. In this scenario, the base station, for example, may determine that the cell switch criteria may be fulfilled for one of the (one or more) reported beam(s) and that the UE has performed early synchronization already with the beam. Accordingly, the base station (e.g. the serving gNB) may instruct the UE to execute an (LTM) cell switch with the reported beam in order to perform a low mobility (RACH-less) cell switch with a target candidate cell associated with the one reported beam.

In a second scenario of the sixth exemplary implementation, the base station may receive one or more measurement report(s) for a beam (or for more beams), for which early synchronization had not been performed before, but which fulfils already the cell switch criteria. This situation may occur, if the measurement report(s) are transmitted by the UE, as a consequence of determining by the UE that the measurement results, e.g. in form of the measurement evaluated value, for the (one or more) beam(s) directly fulfil the second condition, which triggers measurement reporting for cell switch, when early synchronization was not performed before. This situation may occur in dynamic channel condition, e.g. when the UE moves fast towards (and above) the cell edge of the serving cell, so that the UE may determines, for a specific beam, that the cell switch condition is satisfied, without prior performing early synchronization measurement reporting (and execution). Similar, in dynamic channel condition, it is possible that the base station may determine, for a specific beam, that the cell switch condition is satisfied, and trigger cell switch measurement reporting, after the base station had instructed an early synchronization execution for another beam.

In response to receiving the measurement report, the base station determines the channel conditions for the reported beam(s) from the measurement report, and in the second scenario will determine that the cell switch criteria (and also the early synchronization criteria) is fulfilled for at least one of the reported beams, while early synchronization is not executed for the same beam(s). As an option, the base station (e.g. the serving gNB) can then decide to trigger the early synchronization for at least one of the reported beams first, before triggering the (LTM) cell switch procedure, which uses a RACH-less execution, with a target candidate cell associated with the selected reported beam. As another option, the base station (e.g. the serving gNB) can then decide to trigger a cell switch procedure with RACH-based execution (i.e. not to perform the early synchronization procedure before the cell switch).

Different and exemplary solutions of the improved event triggered measurement reporting procedure, which are based on the First solution and its exemplary implementations are explained in the following. For the explanation of the different implementation, some exemplary and simplifying assumptions are made.

*Second solution - Event triggered periodic measurement reporting*

In the improved measurement reporting procedure according to the Second solution the UE performs event triggered periodic measurement reporting (in the following also abbreviated as periodic measurement reporting) upon determining that early synchronization measurement reporting is triggered/activated and/or upon determining that cell switch measurement reporting is triggered/activated.

In a first variant of the Second solution, the first set of measurement reporting parameters and the second set of measurement reporting parameters define periodic measurement reporting, wherein the first set of measurement reporting parameters includes a first periodicity for periodically transmitting measurement reports and the second set of measurement reporting parameters includes a second periodicity for periodically transmitting measurement reports.

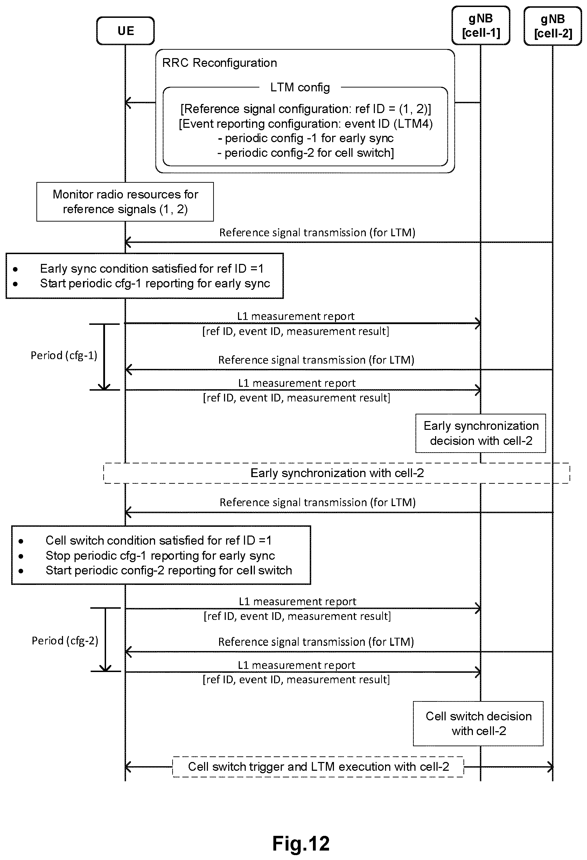

As for example illustrated in the signaling diagram of **Fig. 12,** the event triggered measurement reporting configuration may comprise, besides a reference signal configuration, which identifies one or more beams, for which the UE should evaluate measurement and perform measurement reporting, and an event reporting configuration, which identifies an event ID, a first periodic configuration (periodic config-1) for configuring (event-triggered) periodic early synchronization measurement reporting and a second periodic configuration (periodic config-2) for configuring periodic cell switch measurement reporting.

The first periodic configuration may be obtained from the first set of measurement reporting parameters included in the configuration information, which for example may include a first 'Report Amount' parameter, which specifies the number of times UE shall repeat early synchronization measurement reporting and a 'Report Interval' parameter, which specifies the rate at which UE shall repeat sending measurement reports for early synchronization when the entering condition for early synchronization is triggered (and the entering condition for cell switch is not triggered). The second periodic configuration may be obtained from the second set of measurement reporting parameters included in the configuration information, which for example may include a second 'Report Amount' parameter, which specifies the number of times UE shall repeat cell switch measurement reporting and a 'Report Interval' parameter, which specifies the rate at which UE shall repeat sending measurement reports for cell switch when the entering condition for cell switch is triggered.

In the illustrated example, the reference signal configuration specifies the reference signals with ref. ID = (1, 2), and the event reporting configuration specifies the event with event ID 4, i.e. LTM4 (Beam of candidate cell becomes better than absolute threshold). In line with the configuration, the UE evaluates the measurements of the identified reference signals with ref. ID = (1, 2), which here for example are transmitted by the candidate cell gNB [cell2] and monitors for the detection of such reference signals.

An initial L1 measurement report is transmitted from the UE to the serving gNB, when the UE determines that the measurement evaluated value of at least one of the identified reference signals (associate with cells or beams) fulfils either the early synchronization trigger condition (first condition) or the cell switch trigger condition (second condition). After the initial measurement report is transmitted, the measurement reporting is continued with the configured reporting periodicity (report interval) and reporting amount, which was obtained from the event triggered measurement reporting configuration at the UE. In particular, when early synchronization measurement reporting is triggered (illustrated e.g. for the reference signal with the ref ID =1) the UE prepares and transmits measurement reports according to the first periodic configuration (periodic config-1). Later, when the cell switch measurement reporting is triggered (e.g. because a change of LTMx event condition is detected during reference signal evaluation, for example from early sync condition to cell switch condition when the UE moves further towards the candidate cell), the corresponding periodic configuration is switched. Now, the UE prepares and transmits measurement reports according to the second periodic configuration (periodic config-2), for example until the serving gNB (here gNB [cell-1]) instructs the UE to execute an LTM cell switch with candidate cell cell-2, or until the leaving condition for cell switch is satisfied (for example, when the UE moves back towards the serving gNB).

For transmitting the measurement reports, the UE may, in some examples, be configured with dedicated UL resources, trigger a scheduling request (SR) to request for uplink resources, like PUSCH resources or MAC CE resources, or may use the next PUCCH. In this respect, when the first periodicity and the second periodicity obtained from the two sets of parameter differ, the UE may trigger scheduling requests for transmitting the measurement reports, as this may be more efficient in terms of radio resource utilization and optimization during individual LTMx event conditions. However, in implementation scenarios, where the first periodicity and the second periodicity are equal, configured grant (CG) based measurement reporting (by using dedicated UL resources) may be configured for the UE. In this scenario, the UE may derive the first set of measurement reporting parameters and the second set of measurement reporting parameters by using a common periodicity configuration and may use the dedicated UL resources for transmitting measurement reports.

As a condition for configuring the first periodicity value and the second periodicity, it may be specified that the identified reference signals (of cells/ beams) may be transmitted at higher periodicity intervals (or same periodicity intervals) than the largest periodicity configured in LTMx configuration.

Configuring the periodic event triggered measurement reporting for the early synchronization criteria and for the cell switch criteria facilitates improving the radio resource utilization. For example, if a lower reporting periodicity is chosen (pertaining to early synchronization measurement reporting or cell switch measurement reporting) less uplink resources are required for performing the periodic measurement reporting after the corresponding trigger condition is fulfilled. If a higher reporting periodicity is chosen (pertaining to early synchronization measurement reporting or cell switch measurement reporting), more uplink resources may be required for performing the periodic measurement reporting after the corresponding trigger condition is fulfilled, but since measurement reports are transmitted in a finer interval, a better decision for early synchronization and/or cell switch may be facilitated at the base station during an LTM operation.

For example, in an optional implementation of the Second solution, a value of the first periodicity may be smaller than a value of the second periodicity (in other words the value of the second periodicity may be larger than the value of the first periodicity). Such configuration may allow to save uplink resources during the early synchronization measurement reporting (where a decision of the base station may be less critical), but provide a more fine cell switch measurement reporting when the cell switch criteria is fulfilled (and where the cell switch decision performed by the base station may be more critical).

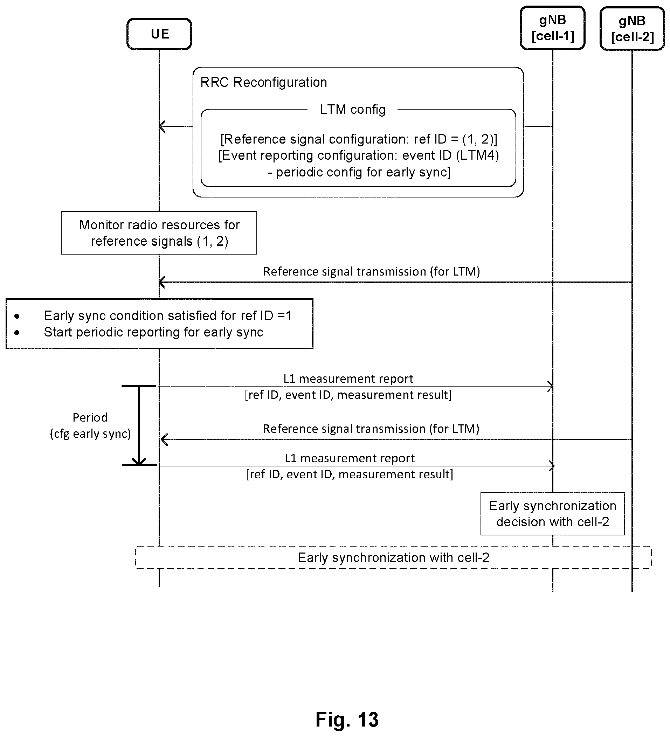

According to a second variant of the Second solution, which is exemplary illustrated in **Fig. 13,** the event triggered periodic measurement reporting may be configured for the early synchronization measurement reporting, while for the cell switch measurement reporting another configuration (see e.g. Third solution and Fourth solution) or singular measurement reporting (see e.g. Fifth solution) may be used.

Especially, in the second variant of the Second solution, the first set of measurement reporting parameters defines periodic measurement reporting, and the first set of measurement reporting parameters includes a first periodicity for periodically transmitting measurement reports.

As for example illustrated in the signaling diagram of Fig. 13, the event triggered measurement reporting configuration may comprise, besides a reference signal configuration, which identifies one or more beams, for which the UE should evaluate measurement and perform measurement reporting, and an event reporting configuration, which identifies an event ID, a first periodic configuration (periodic config for early synchronization) for configuring (event triggered) periodic early synchronization measurement reporting. The first periodic configuration may be obtained (by the processing circuitry of the UE) from the first set of measurement reporting parameters included in the configuration information, which for example may include a first 'Report Amount' parameter, which specifies the number of times UE shall repeat early synchronization measurement reporting and a 'Report Interval' parameter, which specifies the rate at which UE shall repeat sending measurement reports for early synchronization measurement reporting when the entering condition for early synchronization is triggered. Because the operation shown in Fig. 13 is equal to the operation shown in Fig. 12 with respect to the early synchronization measurement reporting a more detailed description is omitted here.

The second variant of the Second solution facilitates to control and optimize the radio resource utilization for early synchronization measurement reporting independently from the cell switch measurement reporting. For example, if a lower reporting periodicity is chosen less uplink resources are required for performing the (event triggered) periodic early synchronization measurement reporting when the first (trigger) condition is fulfilled and the second (trigger) condition is not fulfilled. If a higher reporting periodicity is chosen, more uplink resources may be required for performing the (event triggered) periodic early synchronization measurement reporting when the first (trigger) condition is fulfilled and the second (trigger) condition is not fulfilled, but since measurement reports are transmitted in a finer interval, a better decision for early synchronization may be facilitated at the base station during the early synchronization operation.

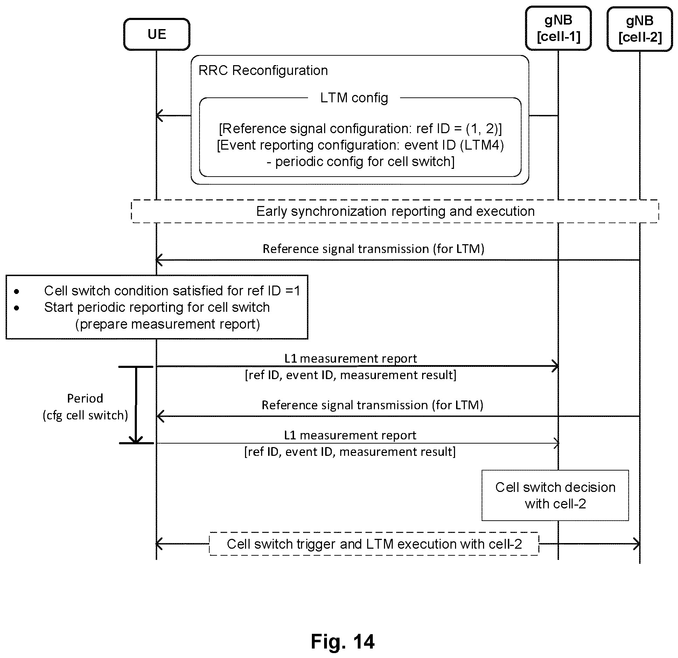

According to a third variant of the Second solution, which is exemplary illustrated in **Fig. 14,** the event triggered periodic measurement reporting may be configured for the cell switch measurement reporting, while for the early synchronization measurement reporting another configuration (see e.g. Third solution and Fourth solution) or singular measurement reporting (see e.g. Fifth solution) may be used.

Especially, in the third variant of the Second solution, the second set of measurement reporting parameters defines periodic measurement reporting, and the second set of measurement reporting parameters includes a first periodicity for periodically transmitting measurement reports.

As for example illustrated in the signaling diagram of Fig. 14, the event triggered measurement reporting configuration may comprise, besides a reference signal configuration, which identifies one or more beams, for which the UE should evaluate measurement and perform measurement reporting, and an event reporting configuration, which identifies an event ID, a second periodic configuration (periodic config-2) for configuring periodic cell switch measurement reporting. The second periodic configuration may be obtained (by the processing circuitry of the UE) from the second set of measurement reporting parameters included in the configuration information, which for example may include a second 'Report Amount' parameter, which specifies the number of times UE shall repeat cell switch measurement reporting and a 'Report Interval' parameter, which specifies the rate at which UE shall repeat sending measurement reports for cell switch when the entering condition for cell switch is triggered. Because the operation shown in Fig. 14 is equal to the operation shown in Fig. 12 with respect to the cell switch measurement reporting a more detailed description is omitted here.

The third variant of the Second solution facilitates to control and optimize the radio resource utilization for cell switch measurement reporting independently from the early synchronization measurement reporting. For example, if a lower reporting periodicity is chosen less uplink resources are required for performing the periodic cell switch measurement reporting when the second (trigger) condition is fulfilled. If a higher reporting periodicity is chosen, more uplink resources may be required for performing the periodic cell switch measurement reporting when the second (trigger) condition is fulfilled, but since measurement reports are transmitted in a finer interval, a better decision for cell switch may be facilitated at the base station during the cell switch operation.

*Third solution - Event triggered semi-persistent measurement reporting*

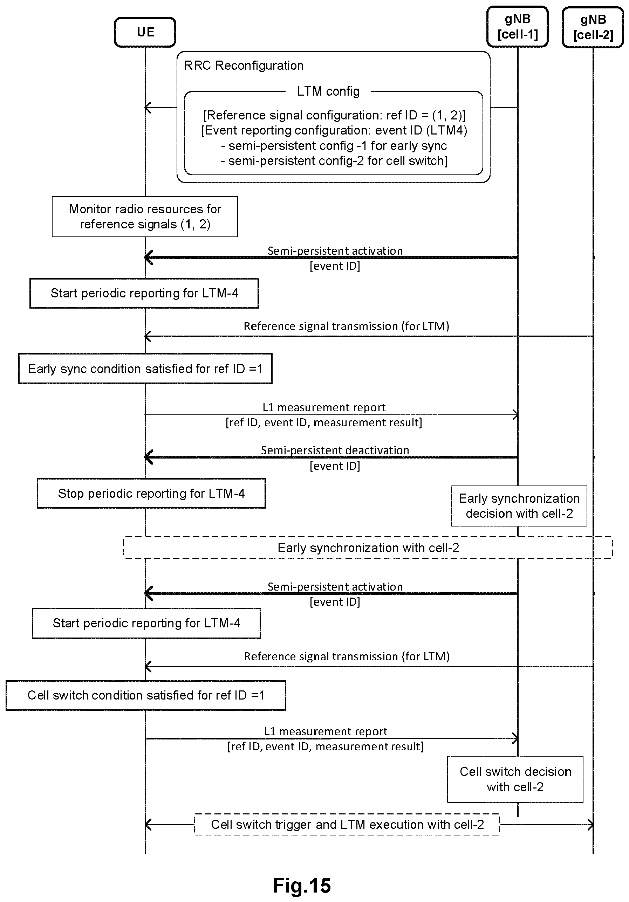

In the improved measurement reporting procedure according to the Third solution the UE performs event triggered semi-persistent measurement reporting (i.e. periodic measurement reporting, which is activated in response to receiving an activation request, in the following also abbreviated as semi-persistent measurement reporting) upon determining that early synchronization measurement reporting is triggered/activated and/or upon determining that cell switch measurement reporting is triggered/activated. In particular, in the Third solution, a measurement report activation request and a measurement report deactivation request for respectively activating and deactivating may be received by the UE in a DCI message (i.e. through PDCCH) or, a MAC control element (CE) message (i.e. through a MAC CE), or a RRC message. By using a DCI message or a MAC CE for transmitting the measurement report activation request and the measurement report deactivation request, a serving gNB-DU, which is also responsible for LTM decision in a split gNB architecture, can benefit, because downlink control information is transmitted using lower layer messages (instead of using higher layer message like RRC).In a first variant of the Third solution, the first set of measurement reporting parameters and the second set of measurement reporting parameters define semi-persistent measurement reporting; and the first set of measurement reporting parameters includes a first periodicity for periodically transmitting measurement reports in response to receiving a measurement reporting request and the second set of measurement reporting parameters includes a second periodicity for periodically transmitting measurement reports in response to receiving a measurement reporting request. As for example illustrated in the signaling diagram of **Fig. 15,** the event triggered measurement reporting configuration may comprise, besides a reference signal configuration, which identifies one or more beams, for which the UE should evaluate measurement and perform measurement reporting, and an event reporting configuration, which identifies an event ID, a first semi-persistent configuration (semi-persistent config-1) for configuring (event triggered) semi-persistent early synchronization measurement reporting and a second semi-persistent configuration (semi-persistent config-2) for configuring semi-persistent cell switch measurement reporting.

The first semi-persistent configuration may be obtained from the first set of measurement reporting parameters included in the configuration information, which for example may include a first 'Report Amount' parameter, which specifies the number of times UE shall repeat early synchronization measurement reporting and a 'Report Interval' parameter, which specifies the rate at which UE shall repeat sending measurement reports for early synchronization when the entering condition for early synchronization is triggered (and the entering condition for cell switch is not triggered) and an measurement report activation request is received . The second periodic configuration may be obtained from the second set of measurement reporting parameters included in the configuration information, which for example may include a second 'Report Amount' parameter, which specifies the number of times UE shall repeat cell switch measurement reporting and a 'Report Interval' parameter, which specifies the rate at which UE shall repeat sending measurement reports for cell switch when the entering condition for cell switch is triggered and an measurement report activation request is received.

In the illustrated example, the reference signal configuration specifies the reference signals with ref. ID = (1, 2), and the event reporting configuration specifies the event with event ID 4, i.e. LTM4 (Beam of candidate cell becomes better than absolute threshold). In line with the configuration, the UE evaluates the measurements of the identified reference signals with ref. ID = (1, 2), which here for example are transmitted by the candidate cell gNB [cell2] and monitors for the detection of such reference signals.

An initial L1 measurement report is transmitted from the UE to the serving gNB, when the UE determines that the measurement evaluated value of at least one of the identified reference signals (associate with cells or beams) fulfils either the early synchronization trigger condition (first condition) or the cell switch trigger condition (second condition). After the initial measurement report is transmitted, the UE waits for receiving the measurement report activation request for activating the event triggered measurement reporting. After receiving the measurement report activation request, the UE starts measurement reporting with the configured reporting periodicity (report interval) and reporting amount, which was obtained from the event triggered measurement reporting configuration at the UE. In particular, when early synchronization measurement reporting is triggered, the UE prepares and transmits measurement reports according to the first semi-persistent configuration (semi-persistent config-1) and when cell switch measurement reporting is triggered, the UE prepares and transmits measurement reports according to the second semi-persistent configuration (semi-persistent config-2).

Alternatively, the measurement report activation request may be received by the UE before one of the early synchronization trigger condition (first condition) or the cell switch trigger condition (second condition). In this case, the UE starts preparing and transmitting measurement reports according to the first semi-persistent configuration (semi-persistent config-1), when early synchronization measurement reporting is triggered, and the UE starts preparing and transmitting measurement reports according to the second semi-persistent configuration (semi-persistent config-2), when cell switch measurement reporting is triggered.

For stopping an activated early synchronization measurement reporting or an activated cell switch measurement reporting, the UE may receive a measurement report deactivation request for deactivating (or inactivating) the event triggered measurement reporting. This may enable the base station for example to stop the early synchronization measurement reporting procedure for all beams, after an early synchronization execution has been performed at the UE for one or more selected beams (cells).

When the cell switch measurement reporting is triggered (e.g. because a change of LTMx event condition is detected during reference signal evaluation, for example from early sync condition to cell switch condition when the UE moves further towards the candidate cell), while the early synchronization measurement reporting is activated, the corresponding semi-persistent configuration is switched. Then, the UE prepares and transmits measurement reports according to the second semi-persistent configuration (semi-persistent config-2). Alternatively, the for example until the serving gNB (here gNB [cell-1]) instructs the UE to execute an LTM cell switch with candidate cell cell-2, until the leaving condition for cell switch is satisfied (for example, when the UE moves back towards the serving gNB), or until the UE receives another measurement report deactivation request.

Again, as a condition for configuring the first periodicity value and the second periodicity, it may be specified that the identified reference signals (of cells/ beams) may be transmitted at higher periodicity intervals (or same periodicity intervals) than the largest periodicity configured in LTMx configuration when the event triggered measurement reporting is activated.

Configuring the semi-persistent event triggered measurement reporting for the early synchronization criteria and for the cell switch criteria further facilitates improving the radio resource utilization. Especially besides being able to configure lower and higher periodicities by activating and deactivating the event triggered measurement reporting only when it is required for LTM related decisions facilitates a more efficient management of radio resources at the base station.

Furthermore, in an optional implementation of the Third solution, a value of the first periodicity may be smaller than a value of the first periodicity (i.e. the second periodicity may be larger than the first periodicity). Such configuration may allow to save uplink resources during the early synchronization measurement reporting (where a decision of the base station may be less critical), but provide a more fine cell switch measurement reporting when the cell switch criteria is fulfilled (and where the cell switch decision performed by the base station may be more critical).

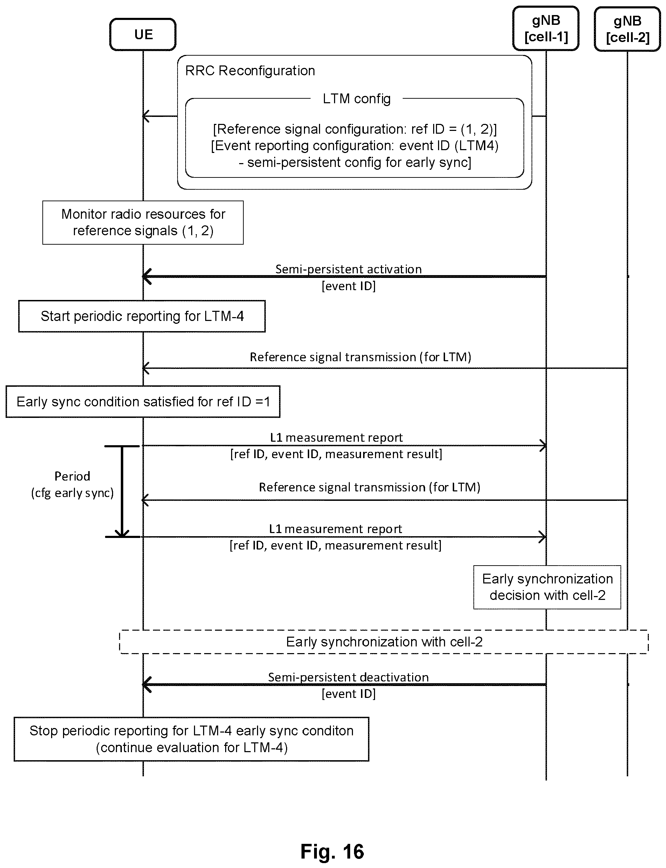

According to a second variant of the Third solution, which is exemplary illustrated in **Fig. 16,** the semi-persistent measurement reporting may be configured for the early synchronization measurement reporting, while for the cell switch measurement reporting another configuration (see e.g. Second solution and Fourth solution) or singular measurement reporting (see e.g. Fifth solution) may be used.

Especially, in the second variant of the Third solution, the first set of measurement reporting parameters defines semi-persistent measurement reporting, and the first set of measurement reporting parameters includes a first periodicity for periodically transmitting measurement reports in response to receiving a measurement reporting request.

As for example illustrated in the signaling diagram of Fig. 16, the event triggered measurement reporting configuration may comprise, besides a reference signal configuration, which identifies one or more beams, for which the UE should evaluate measurement and perform measurement reporting, and an event reporting configuration, which identifies an event ID, a first semi-persistent configuration (semi-persistent config for early synchronization) for configuring (event triggered) semi-persistent early synchronization measurement reporting. The first semi-persistent configuration may be obtained (by the processing circuitry of the UE) from the first set of measurement reporting parameters included in the configuration information, which for example may include a first 'Report Amount' parameter, which specifies the number of times UE shall repeat early synchronization measurement reporting and a 'Report Interval' parameter, which specifies the rate at which UE shall repeat sending measurement reports for early synchronization measurement reporting when the entering condition for early synchronization is triggered and the measurement reporting activation request is received. Because the operation shown in Fig. 16 is equal to the operation shown in Fig. 15 with respect to the early synchronization measurement reporting a more detailed description is omitted here.

The second variant of the Third solution facilitates to activate and deactivate early synchronization measurement reporting only when it is required for an early synchronization decision independently from the cell switch measurement reporting, besides facilitating to configure lower and higher periodicities for the early synchronization measurement reporting. Overall this facilitates a more efficient management of radio resources at the base station. Especially, when early synchronization has been performed for a maximum number of beams (at least one), the base station could deactivate further early synchronization measurement reporting.

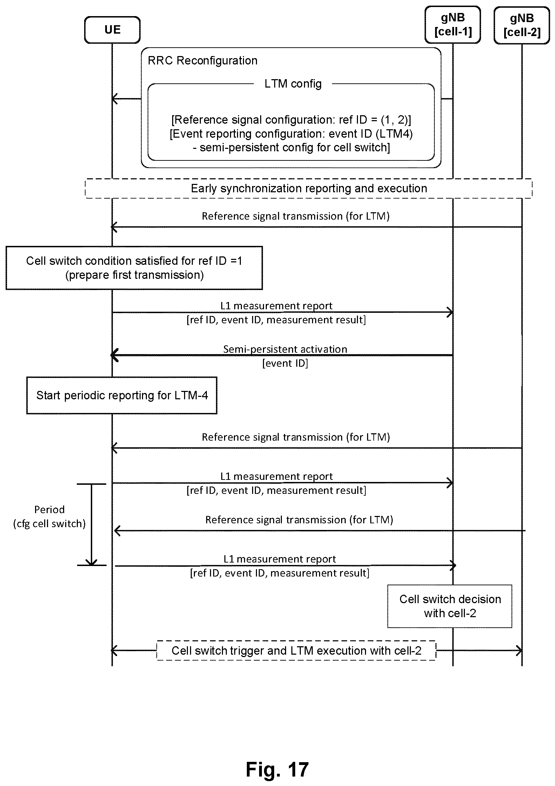

According to a third variant of the Third solution, which is exemplary illustrated in **Fig. 17,** the semi-periodic event triggered measurement reporting may be configured for the cell switch measurement reporting, while for the early synchronization measurement reporting another configuration (see e.g. Second solution and Fourth solution) or singular measurement reporting (see e.g. Fifth solution) may be used.

Especially, in the third variant of the Third solution, the second set of measurement reporting parameters defines semi-persistent measurement reporting, and the second set of measurement reporting parameters includes a second periodicity for periodically transmitting measurement reports.

As for example illustrated in the signaling diagram of Fig. 17, the event triggered measurement reporting configuration may comprise, besides a reference signal configuration, which identifies one or more beams, for which the UE should evaluate measurement and perform measurement reporting, and an event reporting configuration, which identifies an event ID, a second semi-persistent configuration (semi-persistent config for cell switch) for configuring event triggered semi-persistent cell switch measurement reporting. The second semi-persistent configuration may be obtained (by the processing circuitry of the UE) from the second set of measurement reporting parameters included in the configuration information, which for example may include a second 'Report Amount' parameter, which specifies the number of times UE shall repeat cell switch measurement reporting and a 'Report Interval' parameter, which specifies the rate at which UE shall repeat sending measurement reports for cell switch measurement reporting when the entering condition for cell switch is triggered and the measurement reporting activation request is received. Because the operation shown in Fig. 17 is equal to the operation shown in Fig. 15 with respect to the cell switch measurement reporting a more detailed description is omitted here.

The second variant of the Third solution facilitates to activate and deactivate cell switch measurement reporting only when it is required for a cell switch decision independently from the cell switch measurement reporting, besides facilitating to configure lower and higher periodicities for the cell switch measurement reporting. Overall this facilitates a more efficient management of radio resources at the base station. Especially, when the cell switch execution is completed at the UE, the base station could deactivate further cell switch measurement reporting until a subsequent LTM cell switch is required.

*Fourth solution - Event triggered aperiodic measurement reporting*

In the improved measurement reporting procedure according to the Fourth solution the UE performs event triggered aperiodic measurement reporting (i.e. measurement reporting only in response to receiving an aperiodic activation command, in the following also abbreviated as aperiodic measurement reporting) upon determining that early synchronization measurement reporting is triggered/activated and/or upon determining that cell switch measurement reporting is triggered/activated. In particular, in the Third solution, aperiodic request command(s) may be received by the UE in a DCI message (i.e. through PDCCH) or, a MAC control element (CE) message (i.e. through a MAC CE), or a RRC message. By using a DCI message or a MAC CE for transmitting the aperiodic request command(s), the serving gNB-DU, which is responsible for LTM decision in a split gNB architecture, can benefit because DL control information is transmitted by using lower layer messages (instead of using higher layer messages like RRC).

In a first variant of the Fourth solution, the first set of measurement reporting parameters and the second set of measurement reporting parameters define aperiodic measurement reporting.

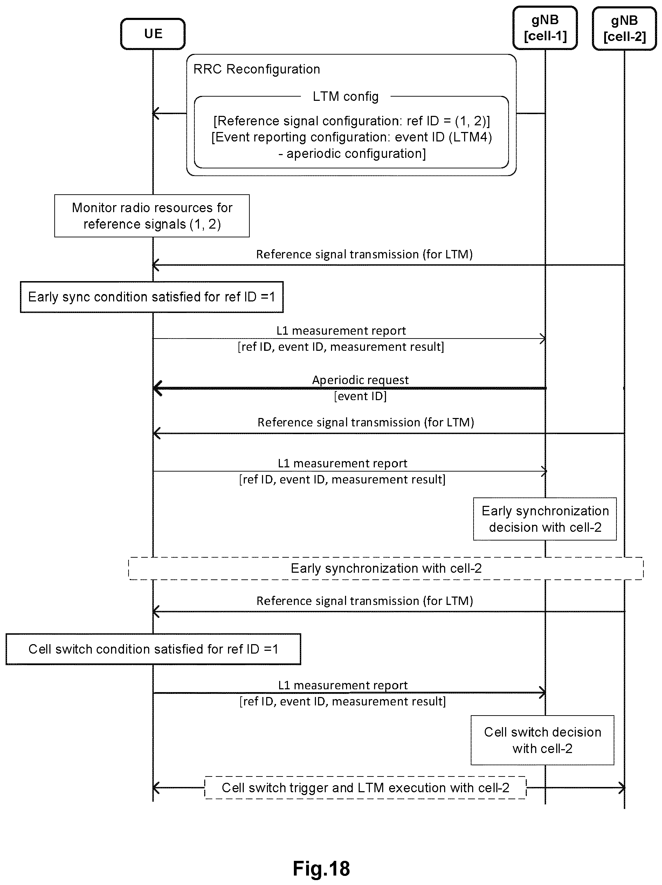

As for example illustrated in the signaling diagram of **Fig. 18,** the event triggered measurement reporting configuration may comprise, besides a reference signal configuration, which identifies one or more beams, for which the UE should evaluate measurement and perform measurement reporting, and an event reporting configuration, which identifies an event ID, a aperiodic configuration for configuring (event triggered) aperiodic early synchronization measurement reporting and aperiodic cell switch measurement reporting.

In the illustrated example, the reference signal configuration specifies the reference signals with ref. ID = (1, 2), and the event reporting configuration specifies the event with event ID 4, i.e. LTM4 (Beam of candidate cell becomes better than absolute threshold). In line with the configuration, the UE evaluates the measurements of the identified reference signals with ref. ID = (1, 2), which here for example are transmitted by the candidate cell gNB [cell2] and monitors for the detection of such reference signals.

When the UE is configured to perform event triggered aperiodic measurement reporting the UE may prepare and transmit only one initial measurement report upon determining that early synchronization measurement reporting is triggered/activated or upon determining that cell switch measurement reporting is triggered/activated and later expects aperiodic request command(s) in DL to repeat measurements reporting.

Accordingly, an initial L1 measurement report is transmitted from the UE to the serving gNB, when the UE determines that the measurement evaluated value of at least one of the identified reference signals fulfils either the early synchronization trigger condition (first condition) or the cell switch trigger condition (second condition) or upon determining that the first condition is fulfilled when only the second condition was fulfilled before. After the initial measurement report is transmitted, the UE waits for receiving the aperiodic request and only prepares and transmits measurement reports in response to receiving an aperiodic request.

Configuring the event triggered aperiodic measurement reporting for the early synchronization criteria and for the cell switch criteria further facilitates improving the radio resource utilization. For example, the network (serving gNB) can determine when additional measurement reports (besides the initial measurement) are required and only in such situations transmit the aperiodic request. For example, for deciding on the early synchronization execution, one measurement report could be sufficient (for each triggered reference signal), while for deciding on the cell switch execution additional measurement reports could be requested by the base station by transmitting aperiodic requests to the UE. In this manner, the first variant of the Fourth solution facilitates a more efficient management of radio resources at the base station.

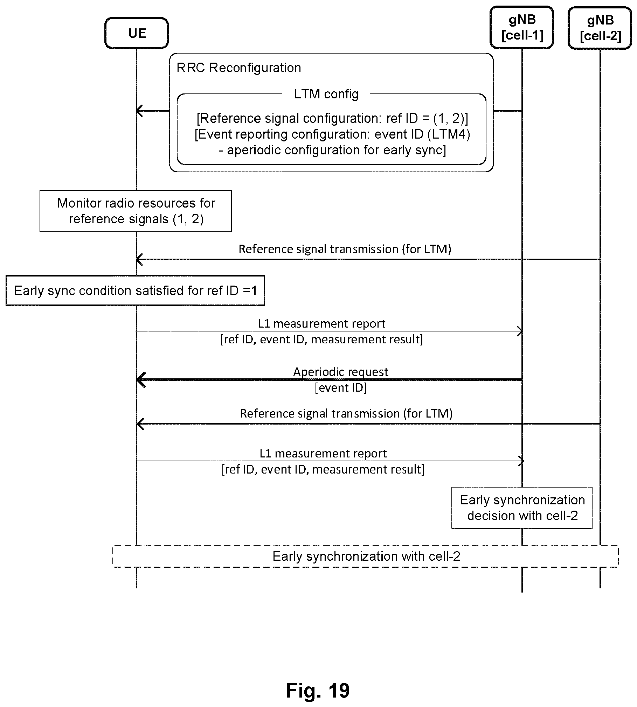

According to a second variant of the Fourth solution, which is exemplary illustrated in **Fig. 19,** the event triggered aperiodic measurement reporting may be configured for the early synchronization measurement reporting, while for the cell switch measurement reporting another configuration (see e.g. Second solution and Third solution) or singular measurement reporting (see e.g. Fifth solution) may be used.

Especially, in the second variant of the Fourth solution, the first set of measurement reporting parameters defines aperiodic measurement reporting.

As for example illustrated in the signaling diagram of Fig. 19, the event triggered measurement reporting configuration may comprise, besides a reference signal configuration, which identifies one or more beams, for which the UE should evaluate measurement and perform measurement reporting, and an event reporting configuration, which identifies an event ID, a aperiodic configuration for early synchronization for configuring (event triggered) aperiodic early synchronization measurement reporting. The aperiodic configuration for early synchronization may be obtained (by the processing circuitry of the UE) from the first set of measurement reporting parameters included in the configuration information. With this configuration, an initial L1 measurement report is transmitted from the UE to the serving gNB, when the UE determines that the measurement evaluated value of at least one of the identified reference signals fulfils the early synchronization trigger condition (first condition) (and not the cell switch trigger condition). After the initial measurement report is transmitted, the UE waits for receiving the aperiodic request and only prepares and transmits measurement reports in response to receiving an aperiodic request.

The second variant of the Fourth solution facilitates improving the radio resource utilization for early synchronization measurement reporting. For example, the network (serving gNB) can determine when additional measurement reports (besides the initial measurement) for the early synchronization execution decision are required and only in such situations transmit the aperiodic request.

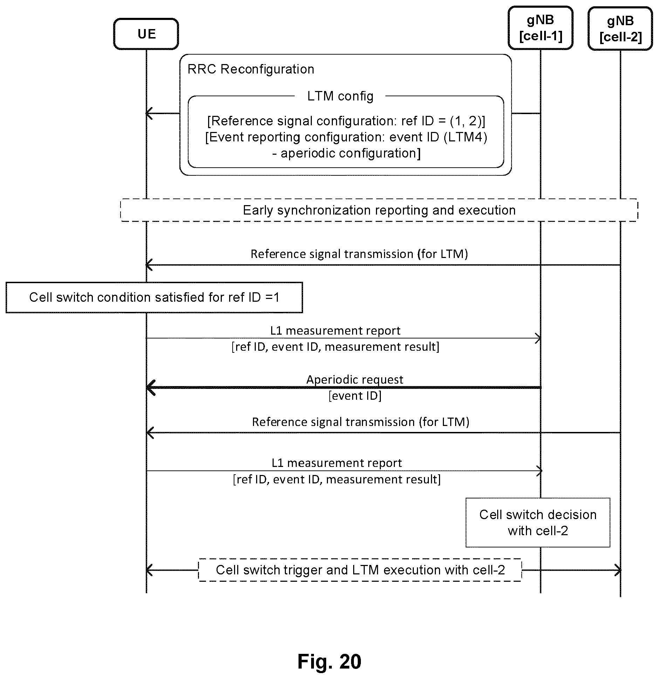

According to a third variant of the Fourth solution, which is exemplary illustrated in **Fig. 20,** the event triggered aperiodic measurement reporting may be configured for the cell switch measurement reporting, while for the early synchronization measurement reporting another configuration (see e.g. Second solution and Third solution) or singular measurement reporting (see e.g. Fifth solution) may be used.

Especially, in the third variant of the Fourth solution, the second set of measurement reporting parameters defines aperiodic measurement reporting.

As for example illustrated in the signaling diagram of Fig. 20, the event triggered measurement reporting configuration may comprise, besides a reference signal configuration, which identifies one or more beams, for which the UE should evaluate measurement and perform measurement reporting, and an event reporting configuration, which identifies an event ID, a aperiodic configuration for cell switch for configuring aperiodic cell switch measurement reporting. The aperiodic configuration for cell switch may be obtained (by the processing circuitry of the UE) from the second set of measurement reporting parameters included in the configuration information. With this configuration, an initial L1 measurement report is transmitted from the UE to the serving gNB, when the UE determines that the measurement evaluated value of at least one of the identified reference signals fulfils the cell switch trigger condition (second condition). After the initial measurement report is transmitted, the UE waits for receiving the aperiodic request and only prepares and transmits measurement reports in response to receiving an aperiodic request.

The third variant of the Fourth solution facilitates improving the radio resource utilization for cell switch measurement reporting. For example, the network (serving gNB) can determine when additional measurement reports (besides the initial measurement) for the cell switch execution decision are required and only in such situations transmit the aperiodic request.

*Fifth solution - Event triggered singular measurement reporting*

In the improved measurement reporting procedure according to the Fifth solution the UE performs event triggered singular measurement reporting (i.e. only one measurement report is transmitted) upon determining that early synchronization measurement reporting is triggered/activated and/or upon determining that cell switch measurement reporting is triggered/activated.

In a first variant of the Fifth solution, the first set of measurement reporting parameters and the second set of measurement reporting parameters do not define a measurement reporting type the and the processing circuitry (of the UE), in operation, determines to transmit a single measurement report in response to determining that measurements on the one or more beams (i) fulfil the first condition and (ii) do not fulfil the second condition and, determines to transmit a single measurement report in response to determining that measurements on the one or more beams fulfil the second condition.

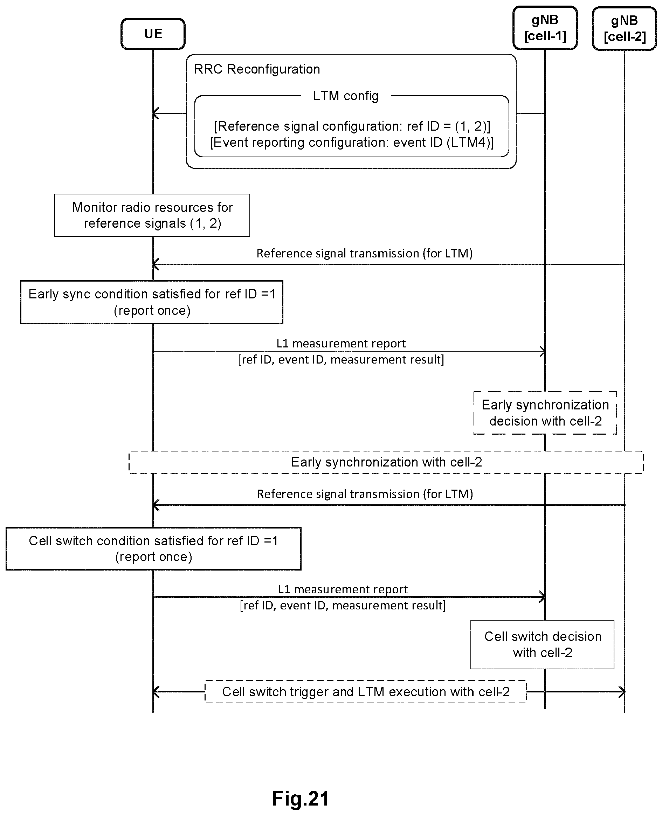

As for example illustrated in the signaling diagram of **Fig. 21,** the event triggered measurement reporting configuration may not comprise a measurement report type configuration, besides having a reference signal configuration, which identifies one or more beams, for which the UE should evaluate measurement and perform measurement reporting, and an event reporting configuration, which identifies an event ID. In other words, in the first variant of the Fifth solution the first set of measurement reporting parameters and the second set of measurement reporting parameters do not indicate a measurement report type for the early synchronization measurement reporting and for the cell switch measurement reporting.

In the illustrated example, the reference signal configuration specifies the reference signals with ref. ID = (1, 2), and the event reporting configuration specifies the event with event ID 4, i.e. LTM4 (Beam of candidate cell becomes better than absolute threshold). In line with the configuration, the UE evaluates the measurements of the identified reference signals with ref. ID = (1, 2), which here for example are transmitted by the candidate cell gNB [cell2] and monitors for the detection of such reference signals.

Because no measurement reporting type is configured, the UE may prepare and transmit only one initial measurement report upon determining that respectively the early synchronization measurement reporting is triggered/activated or the cell switch measurement reporting is triggered/activated. Accordingly, an initial L1 measurement report is transmitted from the UE to the serving gNB, when the UE determines that the measurement evaluated value of at least one of the identified reference signals fulfils either the early synchronization trigger condition (first condition) or the cell switch trigger condition (second condition) or upon determining that the first condition is fulfilled when only the second condition was fulfilled before. After the initial measurement report is transmitted, the UE is not expected to transmit further measurement reports., but the UE continues monitoring and evaluating the identified reference signals. The network (serving gNB), in response to receiving a measurement report may use the result(s) included in the measurement report to decide on the early synchronization execution or the cell switch execution, respectively.

For example, when receiving a single measurement report for early synchronization triggered for a single identified reference signal, the network is expected to instruct the UE to perform the early synchronization execution with the beam (or cell) associated with the reported reference signal. Similar, when receiving a single measurement report for early synchronization triggered for a plurality of the identified reference signals, the network may decide to instruct the UE to perform the early synchronization execution with the beam(s) (or cell(s)) associated with one, a few or all of the reported reference signals. Similar, when receiving a single measurement report for cell switch triggered for a single identified reference signal, the network is expected to instruct the UE to perform the cell switch execution with the beam (or cell) associated with the reported reference signal. Similar, when receiving a single measurement report for cell switch triggered for a plurality of the identified reference signals, the network may decide to instruct the UE to perform the cell switch execution with a beam(s) (or cell(s)) associated with one of the reported reference signals. In another scenario, when receiving one measurement report for cell switch trigger for a candidate beam (or a candidate cell), for which early synchronization had not been performed before, the serving gNB may first decide to instruct the UE to perform an early synchronization execution with that candidate beam (or candidate cell) before instructing the UE to perform an LTM cell switch with that candidate beam (or candidate cell).

The first variant of the Fourth solution facilitates improving the radio resource utilization for early synchronization measurement reporting and cell switch measurement reporting especially for application scenarios where repetition of measurement reports is not required. This may be, for example, beneficial when the network (serving gNB) will certainly use one (among many) candidate cells/ beams for the execution of LTM related decisions when the one candidate cell/beam is detected and reported by UE. Notably, the same effect can be achieved with the event triggered periodic measurement reporting, when the parameters 'Report Amount' are set equal to one in the first variant of the Fifth solution.

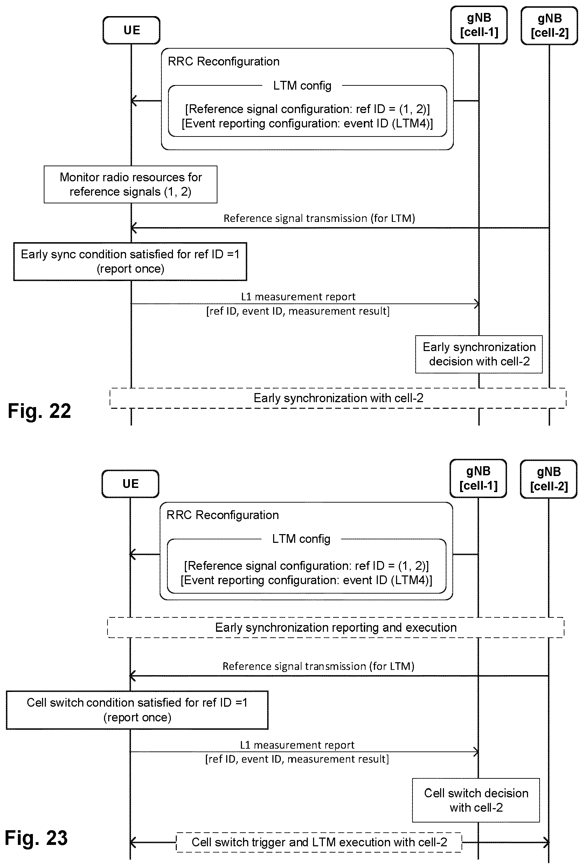

According to a second variant of the Fifth solution, which is exemplary illustrated in **Fig. 22,** the event triggered singular measurement reporting may be configured for the early synchronization measurement reporting, while for the cell switch measurement reporting another configuration (see e.g. Second solution, Third solution and Fourth Solution) is used.

Especially, in the second variant of the Fifth solution, the first set of measurement reporting parameters does not define a measurement reporting type, and the processing circuitry, in operation, determines to transmit a single measurement report in response to determining that measurements on the one or more beams (i) fulfil the first condition and (ii) do not fulfil the second condition.

As for example illustrated in the signaling diagram of Fig. 22, the event triggered measurement reporting configuration may not comprise a measurement report type configuration for early synchronization measurement reporting, besides having a reference signal configuration, which identifies one or more beams, for which the UE should evaluate measurement and perform measurement reporting, and an event reporting configuration, which identifies an event ID. In other words, in the second variant of the Fifth solution the first set of measurement reporting parameters does not indicate a measurement report type for the early synchronization measurement reporting.

With this configuration, an initial L1 measurement report is transmitted from the UE to the serving gNB, when the UE determines that the measurement evaluated value of at least one of the identified reference signals fulfils the early synchronization trigger condition (first condition) (and not the cell switch trigger condition). After the initial measurement report is transmitted, the UE is not expected to transmit further measurement reports (at least until the second condition is fulfilled for one of the identified reference signals), but the UE continues monitoring and evaluating the identified reference signals.

The second variant of the Fifth solution facilitates improving the radio resource utilization for early synchronization measurement reporting, especially for application scenarios where repetition of measurement reports is not required. This may be, for example, beneficial when the network (serving gNB) will certainly use one or more (among many) candidate cells/ beams for the execution of early synchronization when the one or more candidate cell/beam is (are) detected and reported by UE. Notably, the same effect can be achieved with the event triggered periodic measurement reporting, when the parameter 'Report Amount' is set equal to one in the second variant of the Fifth solution.

According to a third variant of the Fifth solution, which is exemplary illustrated in **Fig. 23,** the event triggered singular measurement reporting may be configured for the cell switch measurement reporting, while for the cell switch measurement reporting another configuration (see e.g. Second solution, Third solution and Fourth Solution) is used.

Especially, in the third variant of the Fifth solution, the second set of measurement reporting parameters does not define a measurement reporting type, and the processing circuitry, in operation, determines to transmit a single measurement report in response to determining that measurements on the one or more beams fulfil the second condition.

As for example illustrated in the signaling diagram of Fig. 23, the event triggered measurement reporting configuration may not comprise a measurement report type configuration for cell switch measurement reporting, besides having a reference signal configuration, which identifies one or more beams, for which the UE should evaluate measurement and perform measurement reporting, and an event reporting configuration, which identifies an event ID. In other words, in the third variant of the Fifth solution the second set of measurement reporting parameters does not indicate a measurement report type for the cell switch measurement reporting.

With this configuration, an initial L1 measurement report is transmitted from the UE to the serving gNB, when the UE determines that measurement evaluated value of at least one of the identified reference signals fulfils the cell switch trigger condition (second condition). After the initial measurement report is transmitted, the UE is not expected to transmit further measurement reports (at least as long as the second condition is fulfilled for one of the identified reference signals), but the UE continues monitoring and evaluating the identified reference signals.

The third variant of the Fifth solution facilitates improving the radio resource utilization for cell switch measurement reporting, especially for application scenarios where repetition of measurement reports is not required. This may be, for example, beneficial when the network (serving gNB) will certainly use one (among many) candidate cells/ beams for the execution of cell switch when the one candidate cell/beam is (are) detected and reported by UE. Notably, the same effect can be achieved with the event triggered periodic measurement reporting, when the parameter 'Report Amount' is set equal to one in the third variant of the Fifth solution.

Further Implementations

*RRC connection setup and reconfiguration procedures*

Interactions between a UE, gNB, and AMF (a 5GC entity) in the context of a transition of the UE from RRC_IDLE to RRC_CONNECTED for the NAS part are described (see 3GPP TS 38.300).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

*QoS control*

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

*Open-RAN*

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.

(1) Split Option 1: between RRC (radio resource control) and PDCP

(2) Split Option 2: between PDCP and RLC (High-RLC)

(3) Split Option 3: between High-RLC and Low-RLC

(4) Split Option 4: between RLC (Low-RLC) and MAC (High-MAC)

(5) Split Option 5: between High-MAC and Low-MAC

(6) Split Option 6: between MAC (Low-MAC) and PHY (High-PHY)

(7) Split Option 7: between High-PHY and Low-PHY

(8) Split Option 8: between PHY (Low-PHY) and RF

The functional split point between CU and O-DU may be Split Option 2. The link between CU and O-DU is referred to as midhaul, and the F1 interface is defined by the 3GPP. Further, the link between O-DU and O-RU is referred to as fronthaul and its functional split point may be Split Option 7-2x adopted as the O-RAN fronthaul specifications.

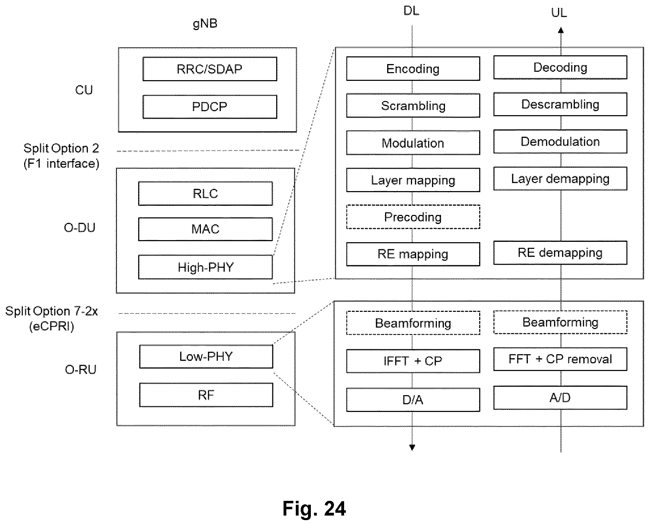

**FIG. 24** illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

*Subband non-overlapping full duplex - SBFD*

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

*XDD - Cross Division Duplex*

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

*Further Variants, including Hardware and Software Implementation of the present disclosure*

(Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

(Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in sidelink communication, a terminal may be adopted instead of a base station. The base station may be a relay apparatus that relays communication between a higher node and a terminal. The base station may be a roadside unit as well.

(Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

(Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

(Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

(Time Intervals)

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

(Frequency Bands)

The present disclosure may be applied to any of a licensed band and an unlicensed band.

(Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

(Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

Further, the various embodiments may also be implemented by means of software modules, which are executed by a processor or directly in hardware. Also, a combination of software modules and a hardware implementation may be possible. The software modules may be stored on any kind of computer readable storage media, for example RAM, EPROM, EEPROM, flash memory, registers, hard disks, CD-ROM, DVD, etc. It should be further noted that the individual features of the different embodiments may individually or in arbitrary combination be subject matter to another embodiment.

It would be appreciated by a person skilled in the art that numerous variations and/or modifications may be made to the present disclosure as shown in the specific embodiments and solutions. The present embodiments and solutions are, therefore, to be considered in all respects to be illustrative and not restrictive.

The present disclosure can be realized by software, hardware, or software in cooperation with hardware. Each functional block used in the description of each embodiment described above can be partly or entirely realized by an LSI such as an integrated circuit, and each process described in each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC (integrated circuit), a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT).

The communication may include exchanging data through, for example, a cellular system, a wireless LAN system, a satellite system, etc., and various combinations thereof.

The communication apparatus may comprise a device such as a controller or a sensor, which is coupled to a communication device performing a function of communication described in the present disclosure. For example, the communication apparatus may comprise a controller or a sensor that generates control signals or data signals, which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

*Further Aspects*

According to a first aspect, it is provided a user equipment, UE, comprising a transceiver, which in operation, receives, from a base station, configuration information for configuring event triggered measurement reporting, and processing circuitry, which in operation, obtains, from the configuration information,

- a first set of measurement reporting parameters, which is useable by the UE for measurement reporting, which is performed in response to determining that measurements on one or more beams (i) fulfil a first condition obtained from the event triggered measurement reporting configuration and (ii) do not fulfil a second condition obtained from the event triggered measurement reporting configuration;

- a second set of measurement reporting parameters, which is useable by the UE for measurement reporting, which is performed in response to determining that measurements on the one or more beams fulfil the second condition.

According to an embodiment, the processing circuitry, in operation, performs measurements on the one or more beam, and evaluates the measurements; and the processing circuitry, in operation, in response to determining that measurements on the one or more beams fulfil the first condition and (ii) do not fulfil the second condition, prepares one or more measurement reports including results of the measurements for the at least one beam by using the first set of measurement reporting parameters; and, in operation, in response to determining that measurements on the one or more beams fulfil the second condition, prepares one or more measurement reports including results of the measurements according to the second set of measurement reporting parameters, and the transceiver, in operation, transmits the one or more measurement reports to the base station.

In an optional implementation of said embodiment, the first condition is a condition for triggering early synchronization measurement reporting, which is performed by the UE in preparation of an early synchronization with a candidate beam of the target candidate cell.

In another optional implementation of said embodiment, the second condition is a condition for triggering cell switch measurement reporting, which is performed by the UE in preparation of a cell switch from a serving cell, which is serving the UE, to a target candidate cell, wherein the target candidate cell is one out of one or more candidates for participating in mobility for the UE.

In another optional implementation of said embodiment, the configuration information identifies a single event.

In another optional implementation of said embodiment, the configuration information identifies more than one event.

In another optional implementation of said embodiment, the measurements are one or more of radio measurements, distance-based measurements and time-based measurements.

In another optional implementation of said embodiment, the transceiver, in operation, transmits the measurement report to the base station by using lower-layer messages.

According to an embodiment, the first set of measurement reporting parameters and the second set of measurement reporting parameters define periodic measurement reporting, and the first set of measurement reporting parameters includes a first periodicity for periodically transmitting measurement reports and the second set of measurement reporting parameters includes a second periodicity for periodically transmitting measurement reports.

In an optional implementation of said embodiment, the second periodicity differs from the first periodicity.

In another optional implementation of said embodiment, a value of the first periodicity is larger than a value of the second periodicity.

According to an embodiment, the first set of measurement reporting parameters defines periodic measurement reporting, the first set of measurement reporting parameters includes a first periodicity for periodically transmitting measurement reports.

According to an embodiment, the second set of measurement reporting parameters defines periodic measurement reporting, and wherein the second set of measurement reporting parameters includes a first periodicity for periodically transmitting measurement reports.

In an optional implementation of said embodiment, the first set of measurement reporting parameters defines semi-persistent measurement reporting.

In another optional implementation of said embodiment, the first set of measurement reporting parameters defines aperiodic measurement reporting.

In an optional implementation of said embodiment, the first set of measurement reporting parameters does not define a measurement reporting type.

According to an embodiment, the first set of measurement reporting parameters and the second set of measurement reporting parameters define semi-persistent measurement reporting, and the first set of measurement reporting parameters includes a first periodicity for periodically transmitting measurement reports in response to receiving a measurement reporting request and the second set of measurement reporting parameters includes a second periodicity for periodically transmitting measurement reports in response to receiving a measurement reporting request.

In an optional implementation of said embodiment, the second periodicity differs from the first periodicity.

In another optional implementation of said embodiment, a value of the first periodicity is larger than a value of the second periodicity.

According to an embodiment, the first set of measurement reporting parameters defines semi-persistent measurement reporting, and the first set of measurement reporting parameters includes a first periodicity for periodically transmitting measurement reports in response to receiving a measurement reporting request.

According to an embodiment, the second set of measurement reporting parameters defines semi-persistent measurement reporting, and wherein the second set of measurement reporting parameters includes a second periodicity for periodically transmitting measurement reports in response to receiving a measurement reporting request.

In an optional implementation of said embodiment, the first set of measurement reporting parameters defines periodic measurement reporting.

In another optional implementation of said embodiment, the first set of measurement reporting parameters defines aperiodic measurement reporting.

In another optional implementation of said embodiment, the first set of measurement reporting parameters does not define a measurement reporting type.

According to an embodiment, the first set of measurement reporting parameters and the second set of measurement reporting parameters define aperiodic measurement reporting.

According to an embodiment, the first set of measurement reporting parameters defines aperiodic measurement reporting.

According to an embodiment, the second set of measurement reporting parameters defines aperiodic measurement reporting.

In an optional implementation of said embodiment, the first set of measurement reporting parameters defines periodic measurement reporting.

In another optional implementation of said embodiment, the first set of measurement reporting parameters defines semi-persistent measurement reporting.

In another optional implementation of said embodiment, the first set of measurement reporting parameters does not define a measurement reporting type.

According to an embodiment, the second set of measurement reporting parameters and the first set of measurement reporting parameters do not define a measurement reporting type, and the processing circuitry, in operation, determines to transmit a single measurement report in response to determining that measurements on the one or more beams (i) fulfil the first condition and (ii) do not fulfil the second condition, and the processing circuitry, in operation, determines to transmit a single measurement report in response to determining that measurements on the one or more beams fulfil the second condition.

According to an embodiment, the first set of measurement reporting parameters does not define a measurement reporting type, and the processing circuitry, in operation, determines to transmit a single measurement report in response to determining that measurements on the one or more beams (i) fulfil the first condition and (ii) do not fulfil the second condition.

According to an embodiment, the second set of measurement reporting parameters does not define a measurement reporting type, and the processing circuitry, in operation, determines to transmit a single measurement report in response to determining that measurements on the one or more beams fulfil the second condition.

In an optional implementation of said embodiment, the first measurement reporting configuration defines periodic measurement reporting.

In another optional implementation of said embodiment, the first measurement reporting configuration defines semi-persistent measurement reporting.

In another optional implementation of said embodiment, the first measurement reporting configuration defines aperiodic measurement reporting.

According to a second aspect, it is provided a base station comprising processing circuitry, which in operation, generates configuration information for configuring event triggered measurement reporting, wherein the configuration information indicates a first set of measurement reporting parameters, which is useable by the UE for measurement reporting performed in response to determining that measurements on one or more beams (i) fulfil a first condition obtained from the configuration information and (ii) do not fulfil a second condition obtained from the configuration information, and a second set of measurement reporting parameters, which is useable by the UE for measurement reporting, performed in response to determining that measurements on the one or more beams fulfil the second condition, and comprising a transceiver, which in operation, transmits the generated configuration information to the UE.

According to an embodiment, the first set of measurement reporting parameters and the second set of measurement reporting parameters define periodic measurement reporting, and the first set of measurement reporting parameters includes a first periodicity for periodically transmitting measurement reports and the second set of measurement reporting parameters includes a second periodicity for periodically transmitting measurement reports.

In an optional implementation of said embodiment, the second periodicity differs from the first periodicity.

In another optional implementation of said embodiment, a value of the first periodicity is larger than a value of the second periodicity.

According to an embodiment, the first set of measurement reporting parameters defines periodic measurement reporting, the first set of measurement reporting parameters includes a first periodicity for periodically transmitting measurement reports.

According to an embodiment, the second set of measurement reporting parameters defines periodic measurement reporting, and wherein the second set of measurement reporting parameters includes a first periodicity for periodically transmitting measurement reports.

In an optional implementation of said embodiment, the first set of measurement reporting parameters defines semi-persistent measurement reporting.

In another optional implementation of said embodiment, the first set of measurement reporting parameters defines aperiodic measurement reporting.

In an optional implementation of said embodiment, the first set of measurement reporting parameters does not define a measurement reporting type.

According to an embodiment, the first set of measurement reporting parameters and the second set of measurement reporting parameters define semi-persistent measurement reporting, and the first set of measurement reporting parameters includes a first periodicity for periodically transmitting measurement reports in response to receiving a measurement reporting request and the second set of measurement reporting parameters includes a second periodicity for periodically transmitting measurement reports in response to receiving a measurement reporting request.

In an optional implementation of said embodiment, the second periodicity differs from the first periodicity.

In another optional implementation of said embodiment, a value of the first periodicity is larger than a value of the second periodicity.

According to an embodiment, the first set of measurement reporting parameters defines semi-persistent measurement reporting, and the first set of measurement reporting parameters includes a first periodicity for periodically transmitting measurement reports in response to receiving a measurement reporting request.

According to an embodiment, the second set of measurement reporting parameters defines semi-persistent measurement reporting, and wherein the second set of measurement reporting parameters includes a second periodicity for periodically transmitting measurement reports in response to receiving a measurement reporting request.

In an optional implementation of said embodiment, the first set of measurement reporting parameters defines periodic measurement reporting.

In another optional implementation of said embodiment, the first set of measurement reporting parameters defines aperiodic measurement reporting.

In another optional implementation of said embodiment, the first set of measurement reporting parameters does not define a measurement reporting type.

According to an embodiment, the first set of measurement reporting parameters and the second set of measurement reporting parameters define aperiodic measurement reporting.

According to an embodiment, the first set of measurement reporting parameters defines aperiodic measurement reporting.

According to an embodiment, the second set of measurement reporting parameters defines aperiodic measurement reporting.

In an optional implementation of said embodiment, the first set of measurement reporting parameters defines periodic measurement reporting.

In another optional implementation of said embodiment, the first set of measurement reporting parameters defines semi-persistent measurement reporting.

In another optional implementation of said embodiment, the first set of measurement reporting parameters does not define a measurement reporting type.

According to an embodiment, the second set of measurement reporting parameters and the first set of measurement reporting parameters do not define a measurement reporting type.

According to an embodiment, the first set of measurement reporting parameters does not define a measurement reporting type.

According to an embodiment, the second set of measurement reporting parameters does not define a measurement reporting type.

In an optional implementation of said embodiment, the first measurement reporting configuration defines periodic measurement reporting.

In another optional implementation of said embodiment, the first measurement reporting configuration defines semi-persistent measurement reporting.

In another optional implementation of said embodiment, the first measurement reporting configuration defines aperiodic measurement reporting.

According to a third aspect it is provided a communication system comprising the UE according to the first aspect or any embodiment/implementation thereof and/or a base station according to the second aspect or any embodiment/implementation thereof.

According to a fourth aspect, it is provided a method for a UE, wherein the method comprises receiving, from a base station, configuration information for configuring event triggered measurement reporting, and processing circuitry, which in operation, obtains, from the configuration information,

- a first set of measurement reporting parameters, which is useable by the UE for measurement reporting, which is performed in response to determining that measurements on one or more beams (i) fulfil a first condition obtained from the event triggered measurement reporting configuration and (ii) do not fulfil a second condition obtained from the event triggered measurement reporting configuration;
- a second set of measurement reporting parameters, which is useable by the UE for measurement reporting, which is performed in response to determining that measurements on the one or more beams fulfil the second condition.

The method of the fourth aspect may in addition implement any of the operations performed by the UE according to the first aspect or any embodiment/implementation thereof.

According to a fifth aspect, it is provided an integrated circuit (that may be deployed in a communication system, in particular a user equipment, UE). The integrated circuit, in operation, may perform the steps of the method of the fourth aspect or any embodiment/implementation thereof.

According to a sixth aspect, it is provided a method for a base station, wherein the method comprises generating configuration information for configuring event triggered measurement reporting, wherein the configuration information indicates a first set of measurement reporting parameters, which is useable by the UE for measurement reporting

performed in response to determining that measurements on one or more beams (i) fulfil a first condition obtained from the configuration information and (ii) do not fulfil a second condition obtained from the configuration information, and a second set of measurement reporting parameters, which is useable by the UE for measurement reporting, performed in response to determining that measurements on the one or more beams fulfil the second condition, and transmitting the generated configuration information to the UE.

The method of the sixth aspect may in addition implement any of the operations performed by the base station according to the second aspect or any embodiment/implementation thereof.

According to a seventh aspect, it is provided an integrated circuit (that may be deployed in a communication system, in particular a base station). The integrated circuit, in operation, may perform the steps of the method of the sixth aspect or any embodiment/implementation thereof.

**Claims**

1.  A user equipment, UE, comprising:

    a transceiver, which in operation, receives, from a base station, configuration information for configuring event triggered measurement reporting;
    processing circuitry, which in operation, obtains, from the configuration information,

    • a first set of measurement reporting parameters, which is useable by the UE for measurement reporting, which is performed in response to determining that measurements on one or more beams (i) fulfil a first condition obtained from the event triggered measurement reporting configuration and (ii) do not fulfil a second condition obtained from the event triggered measurement reporting configuration;
    • a second set of measurement reporting parameters, which is useable by the UE for measurement reporting, which is performed in response to determining that measurements on the one or more beams fulfil the second condition.

2.  The UE according to claim 1, wherein the processing circuitry, in operation, performs measurements on the one or more beam, and evaluates the measurements; and

    wherein the processing circuitry, in operation, in response to determining that measurements on the one or more beams fulfil the first condition and (ii) do not fulfil the second condition, prepares one or more measurement reports including results of the measurements for the at least one beam by using the first set of measurement reporting parameters; and
    wherein the processing circuitry, in operation, in response to determining that measurements on the one or more beams fulfil the second condition, prepares one or more measurement reports including results of the measurements according to the second set of measurement reporting parameters; and
    wherein the transceiver, in operation, transmits the one or more measurement reports to the base station;
    optionally, wherein the first condition is a condition for triggering early synchronization measurement reporting, which is performed by the UE in preparation of an early synchronization with a candidate beam of the target candidate cell;
    optionally, wherein the second condition is a condition for triggering cell switch measurement reporting, which is performed by the UE in preparation of a cell switch from a serving cell, which is serving the UE, to a target candidate cell, wherein the target candidate cell is one out of one or more candidates for participating in mobility for the UE;
    optionally, wherein the configuration information identifies a single event;
    optionally, wherein the configuration information identifies more than one event;
    optionally wherein the measurements are one or more of radio measurements, distance-based measurements and time-based measurements;
    optionally wherein the transceiver, in operation, transmits the measurement report to the base station by using lower-layer messages.

3.  The UE according to one of claims 1 or 2, wherein the first set of measurement reporting parameters and the second set of measurement reporting parameters define periodic measurement reporting;

    wherein the first set of measurement reporting parameters includes a first periodicity for periodically transmitting measurement reports and the second set of measurement reporting parameters includes a second periodicity for periodically transmitting measurement reports;
optionally, wherein the second periodicity differs from the first periodicity;
optionally, wherein a value of the first periodicity is larger than a value of the second periodicity.

4. The UE according to one of claims 1 or 2, wherein the first set of measurement reporting parameters defines periodic measurement reporting, and wherein the first set of measurement reporting parameters includes a first periodicity for periodically transmitting measurement reports.

5. The UE according to one of claims 1 or 2, wherein the second set of measurement reporting parameters defines periodic measurement reporting, and wherein the second set of measurement reporting parameters includes a first periodicity for periodically transmitting measurement reports;

   optionally, wherein the first set of measurement reporting parameters defines semi-persistent measurement reporting;
   optionally, wherein the first set of measurement reporting parameters defines aperiodic measurement reporting;
   optionally, wherein the first set of measurement reporting parameters does not define a measurement reporting type.

6. The UE according to one of claims 1 or 2, wherein the first set of measurement reporting parameters and the second set of measurement reporting parameters define semi-persistent measurement reporting; and

   wherein the first set of measurement reporting parameters includes a first periodicity for periodically transmitting measurement reports in response to receiving a measurement reporting request and the second set of measurement reporting parameters includes a second periodicity for periodically transmitting measurement reports in response to receiving a measurement reporting request;
   optionally, wherein the second periodicity differs from the first periodicity;
   optionally, wherein a value of the first periodicity is larger than a value of the second periodicity.

7. The UE according to one of claims 1 or 2, wherein the first set of measurement reporting parameters defines semi-persistent measurement reporting, and
   wherein the first set of measurement reporting parameters includes a first periodicity for periodically transmitting measurement reports in response to receiving a measurement reporting request.

8. The UE according to one of claims 1 or 2, wherein the second set of measurement reporting parameters defines semi-persistent measurement reporting, and wherein the second set of measurement reporting parameters includes a second periodicity for periodically transmitting measurement reports in response to receiving a measurement reporting request;

   optionally, wherein the first set of measurement reporting parameters defines periodic measurement reporting;
   optionally, wherein the first set of measurement reporting parameters defines aperiodic measurement reporting;
   optionally, wherein the first set of measurement reporting parameters does not define a measurement reporting type.

9. The UE according to one of claims 1 or 2, wherein the first set of measurement reporting parameters and the second set of measurement reporting parameters define aperiodic measurement reporting.

10. The UE according to one of claims 1 or 2, wherein the first set of measurement reporting parameters defines aperiodic measurement reporting.

11. The UE according to one of claims 1 or 2, wherein the second set of measurement reporting parameters defines aperiodic measurement reporting;

   optionally, wherein the first set of measurement reporting parameters defines periodic measurement reporting;
   optionally, wherein the first set of measurement reporting parameters defines semi-persistent measurement reporting;
   optionally, wherein the first set of measurement reporting parameters does not define a measurement reporting type.

12. The UE according to one of claims 1 or 2, wherein the second set of measurement reporting parameters and the first set of measurement reporting parameters do not define a measurement reporting type, and

wherein the processing circuitry, in operation, determines to transmit a single measurement report in response to determining that measurements on the one or more beams (i) fulfil the first condition and (ii) do not fulfil the second condition; and

wherein the processing circuitry, in operation, determines to transmit a single measurement report in response to determining that measurements on the one or more beams fulfil the second condition.

13. The UE according to one of claims 1 or 2, wherein the first set of measurement reporting parameters does not define a measurement reporting type, and
wherein the processing circuitry, in operation, determines to transmit a single measurement report in response to determining that measurements on the one or more beams (i) fulfil the first condition and (ii) do not fulfil the second condition.

14. The UE according to one of claims 1 or 2, wherein the second set of measurement reporting parameters does not define a measurement reporting type, and

wherein the processing circuitry, in operation, determines to transmit a single measurement report in response to determining that measurements on the one or more beams fulfil the second condition;
optionally, wherein the first measurement reporting configuration defines periodic measurement reporting;
optionally, wherein the first measurement reporting configuration defines semi-persistent measurement reporting;
optionally, wherein the first measurement reporting configuration defines aperiodic measurement reporting.

15. A base station comprising:

processing circuitry, which in operation, generates configuration information for configuring event triggered measurement reporting;
wherein the configuration information indicates

• a first set of measurement reporting parameters, which is useable by the UE for measurement reporting performed in response to determining that measurements on one or more beams (i) fulfil a first condition obtained from the configuration information and (ii) do not fulfil a second condition obtained from the configuration information; and
• a second set of measurement reporting parameters, which is useable by the UE for measurement reporting, performed in response to determining that measurements on the one or more beams fulfil the second condition, and

a transceiver, which in operation, transmits the generated configuration information to the UE.

Fig. 1

Fig. 2

**Fig. 3**

**Fig. 4**

channel

transceiver (transmitter, receiver)

input/output node

processing circuitry

communication device, UE

transceiver (transmitter, receiver)

input/output node

processing circuitry

scheduling device, BS, eNB/gNB

**Fig. 5**

Event configuration
parameter
obtaining circuitry

Measurement evaluation
circuitry

communication device, UE

Configuration (information)
generation circuitry

Measurement report
evaluation circuitry

scheduling device, BS, eNB/gNB

**Fig. 6**

**Fig. 7**

UE Start

S810: receiving configuration information for configuring event triggered measurement reporting

S820: obtaining a first set of measurement reporting parameters and a second set of measurement parameters

S830: evaluating measurements on one or more beams

**Fig. 8**

Base station Start

S910: generating configuration information for configuring event triggered measurement reporting

S920: transmitting the configuration information

S930: receiving measurement reports

S940: evaluating the measurement reports

**Fig. 9**

Early sync condition

Cell switch condition

←- - - - - - - - - - - -
Leaving condition
(with/no reporting)

⊢- - - - - - - - - - - - - ->
Cell switch reporting

⊢- - - - - - - - - - - - - ->
Early sync reporting

⊢- - - - - - - - - - - - - ->
Common region for
cell switch and early
sync reporting

LTMx event
timeline

**Fig. 10**

Early sync
condition

Cell switch
condition

- - - - - - - - - - - ->⁞
Early sync reporting

⊢- - - - - - - - - - - ->
Cell switch reporting

LTMx event
timeline

**Fig. 11**

**Fig.12**

UE    gNB [cell-1]    gNB [cell-2]

RRC Reconfiguration

LTM config

[Reference signal configuration: ref ID = (1, 2)]
[Event reporting configuration: event ID (LTM4)
- periodic config for early sync]

Monitor radio resources for
reference signals (1, 2)

Reference signal transmission (for LTM)

- Early sync condition satisfied for ref ID =1
- Start periodic reporting for early sync

L1 measurement report
[ref ID, event ID, measurement result]

Period
(cfg early sync)

Reference signal transmission (for LTM)

L1 measurement report
[ref ID, event ID, measurement result]

Early synchronization
decision with cell-2

Early synchronization with cell-2

**Fig. 13**

Fig. 14

**Fig.15**

UE | gNB [cell-1] | gNB [cell-2]

RRC Reconfiguration

LTM config

[Reference signal configuration: ref ID = (1, 2)]
[Event reporting configuration: event ID (LTM4)
- semi-persistent config for early sync]

Monitor radio resources for
reference signals (1, 2)

Semi-persistent activation
[event ID]

Start periodic reporting for LTM-4

Reference signal transmission (for LTM)

Early sync condition satisfied for ref ID =1

L1 measurement report
[ref ID, event ID, measurement result]

Period
(cfg early sync)

Reference signal transmission (for LTM)

L1 measurement report
[ref ID, event ID, measurement result]

Early synchronization
decision with cell-2

Early synchronization with cell-2

Semi-persistent deactivation
[event ID]

Stop periodic reporting for LTM-4 early sync conditon
(continue evaluation for LTM-4)

**Fig. 16**

**Fig. 17**

Fig.18

UE    gNB [cell-1]    gNB [cell-2]

RRC Reconfiguration

LTM config

[Reference signal configuration: ref ID = (1, 2)]
[Event reporting configuration: event ID (LTM4)
- aperiodic configuration for early sync]

Monitor radio resources for
reference signals (1, 2)

Reference signal transmission (for LTM)

Early sync condition satisfied for ref ID =1

L1 measurement report
[ref ID, event ID, measurement result]

Aperiodic request
[event ID]

Reference signal transmission (for LTM)

L1 measurement report
[ref ID, event ID, measurement result]

Early synchronization
decision with cell-2

Early synchronization with cell-2

**Fig. 19**

51

**Fig. 20**

UE | gNB [cell-1] | gNB [cell-2]

RRC Reconfiguration

LTM config

[Reference signal configuration: ref ID = (1, 2)]
[Event reporting configuration: event ID (LTM4)]

Monitor radio resources for
reference signals (1, 2)

Reference signal transmission (for LTM)

Early sync condition satisfied for ref ID =1
(report once)

L1 measurement report
[ref ID, event ID, measurement result]

Early synchronization
decision with cell-2

Early synchronization with cell-2

Reference signal transmission (for LTM)

Cell switch condition satisfied for ref ID =1
(report once)

L1 measurement report
[ref ID, event ID, measurement result]

Cell switch decision
with cell-2

Cell switch trigger and LTM execution with cell-2

**Fig.21**

**Fig. 22**

UE | gNB [cell-1] | gNB [cell-2]

RRC Reconfiguration

LTM config

[Reference signal configuration: ref ID = (1, 2)]
[Event reporting configuration: event ID (LTM4)]

Monitor radio resources for reference signals (1, 2)

Reference signal transmission (for LTM)

Early sync condition satisfied for ref ID =1 (report once)

L1 measurement report
[ref ID, event ID, measurement result]

Early synchronization decision with cell-2

Early synchronization with cell-2

**Fig. 23**

UE | gNB [cell-1] | gNB [cell-2]

RRC Reconfiguration

LTM config

[Reference signal configuration: ref ID = (1, 2)]
[Event reporting configuration: event ID (LTM4)]

Early synchronization reporting and execution

Reference signal transmission (for LTM)

Cell switch condition satisfied for ref ID =1 (report once)

L1 measurement report
[ref ID, event ID, measurement result]

Cell switch decision with cell-2

Cell switch trigger and LTM execution with cell-2

Fig. 24

Europäisches
Patentamt
European
Patent Office
Office européen
des brevets

# EUROPEAN SEARCH REPORT

**Application Number**

EP 24 19 3779

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 626 373 A (NEC CORP [JP]) 24 July 2024 (2024-07-24) * page 2 - page 8; figures 8-14 * ----- | 1-15 | INV. H04B7/06 H04W24/10 H04W36/00 |
| A | "3rd Generation Partnership Project; Technical Specification Group Radio Access Network; NR; NR and NG-RAN Overall Description; Stage 2 (Release 18)", 3GPP STANDARD; TECHNICAL SPECIFICATION; 3GPP TS 38.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. V18.2.0 12 July 2024 (2024-07-12), pages 1-269, XP052625324, Retrieved from the Internet: URL:https://ftp.3gpp.org/Specs/archive/38_series/38.300/38300-i20.zip 38300-i20.docx [retrieved on 2024-07-12] * page 99 - page 104; figures 9.2.3.5.2-1 * ----- | 1-15 | |

| | | | TECHNICAL FIELDS SEARCHED (IPC) |
|---|---|---|---|
| | | | H04B H04W |

The present search report has been drawn up for all claims

| Place of search | Date of completion of the search | Examiner |
|---|---|---|
| The Hague | 9 December 2024 | Dietsche, Ranjini |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 19 3779

This annex lists the patent family members relating to the patent documents cited in the above-mentioned European search report.
The members are as contained in the European Patent Office EDP file on
The European Patent Office is in no way liable for these particulars which are merely given for the purpose of information.

09-12-2024

| Patent document cited in search report | | Publication date | Patent family member(s) | | Publication date |
|---|---|---|---|---|---|
| GB 2626373 | A | 24-07-2024 | GB | 2626373 A | 24-07-2024 |
| | | | WO | 2024154712 A1 | 25-07-2024 |

EPO FORM P0459

For more details about this annex : see Official Journal of the European Patent Office, No. 12/82